(19) Europäisches Patentamt
European Patent Office
Office européen des brevets

(11) EP 2 881 771 A1

(12) **EUROPEAN PATENT APPLICATION**
published in accordance with Art. 153(4) EPC

(43) Date of publication:
**10.06.2015 Bulletin 2015/24**

(21) Application number: **13826514.5**

(22) Date of filing: **30.07.2013**

(51) Int Cl.:
*G02B 5/30* (2006.01)
*B29C 47/00* (2006.01)
*C08J 5/18* (2006.01)
*C08L 69/00* (2006.01)
*C08L 101/12* (2006.01)
*B29K 69/00* (2006.01)
*B29L 7/00* (2006.01)

(86) International application number:
**PCT/JP2013/070656**

(87) International publication number:
**WO 2014/021346 (06.02.2014 Gazette 2014/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.08.2012 JP 2012171506**

(71) Applicant: **Mitsubishi Chemical Corporation**
**Chiyoda-ku**
**Tokyo 100-8251 (JP)**

(72) Inventors:
- **NAMIKI Shingo**
  **Kitakyushu-shi**
  **Fukuoka 806-0004 (JP)**
- **TAJIMA Hiroyuki**
  **Hiratsuka-shi**
  **Kanagawa 254-0016 (JP)**
- **YOKOGI Masashi**
  **Kitakyushu-shi**
  **Fukuoka 806-0004 (JP)**
- **TANAKA Tomohiko**
  **Yokkaichi-shi**
  **Mie 510-8530 (JP)**
- **KOSUGE Akira**
  **Kitakyushu-shi**
  **Fukuoka 806-0004 (JP)**

(74) Representative: **Vossius & Partner**
**Patentanwälte Rechtsanwälte mbB**
**Siebertstrasse 3**
**81675 München (DE)**

# (54) POLYCARBONATE RESIN COMPOSITION AND TRANSPARENT FILM

(57) A transparent film obtained by molding a polycarbonate resin composition comprising 100 parts by weight of (A) a polycarbonate resin containing (a) a structural unit derived from a dihydroxy compound represented by the following formula (1) and (b) a structural unit derived from a dihydroxy compound having an ether ring, and from 0.1 to 10 parts by weight of (B) a resin having a composition different from that of the polycarbonate resin (A), with the absolute value of the difference in the glass transition temperature between the resin (B) and the polycarbonate resin (A) being 80°C or less and the absolute value of the difference in the refractive index being 0.02 or less, wherein in the transparent film, the ratio of the retardation measured at a wavelength of 450 nm to the retardation measured at a wavelength of 550 nm satisfies a specific formula.

[Chem. 1]

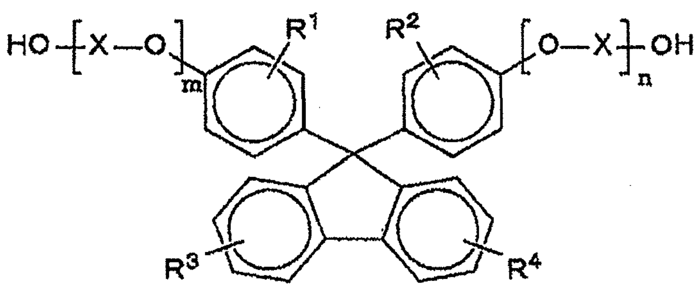

(1)

EP 2 881 771 A1

## Description

### Technical Field

The present invention relates to a polycarbonate resin and a transparent film comprising the same.

### Background Art

A polycarbonate resin is excellent in the transparency, heat resistance, toughness, etc. Therefore, for example, a polycarbonate resin film stretched in a uniaxial direction and having optically uniaxial anisotropy has been developed as an optical film for optical compensation used in an STN-mode liquid crystal display, etc.
In a liquid crystal display of a transmissive color liquid crystal display device, a transflective or reflective color liquid crystal display device, etc., an optical film capable of making optical compensation at a wavelength in the visible region visually perceivable to a human is demanded.
For thus making optical compensation in the entire visible region, a retardation film having a so-called reverse wavelength dispersion property of increasing in the retardation as the wavelength becomes longer is known. For example, in Patent Document 1, a polycarbonate resin composed by copolymerization of a bisphenol A structure and a bisphenol fluorene structure has been proposed.
Furthermore, in Patent Documents 2 to 5, a polycarbonate having a glass transition temperature of 200°C or less and containing a fluorene-containing dihydroxy compound and an ether-containing cyclic aliphatic dihydroxy compound such as spiroglycol and isosorbide has been proposed.
Recently, in the field of transparent film including an optical film such as retardation film used in a liquid crystal display device, a mobile device, etc., it is desired for reducing the cost or environmental impact to form a resin into a film by a melt film-forming method of heat-melting and molding the resin without using a solvent, instead of the conventional solution casting film-forming method using a solvent. In addition, for reducing the weight or cost, formation of a thin film is demanded. In order to form a thin film and develop the desired retardation, the film needs to be stretched at a lower temperature or at a higher stretch ratio and to this end, very high stretching properties such as flexibility and roughness are required of the resin used for stretching.
However, the glass transition temperature of the polycarbonate resin disclosed in Patent Document 1 is 220°C or more because of its rigid polymer chain and therefore, for forming the polycarbonate resin into a film, a melt film-forming method can be hardly used but a solvent casting film-forming method must be used.
To enable melt film formation of a polycarbonate resin having a high glass transition temperature disclosed in Patent Document 1, Patent Document 6 has proposed a technique of lowering the glass transition temperature by blending a polyether ester resin and a polystyrene-based resin with the polycarbonate resin composed by copolymerization of a bisphenol A structure and a bisphenol fluorene structure.
On the other hand, in Patent Documents 2 to 5, a polycarbonate resin containing a fluorene-containing dihydroxy compound and an ether-containing cyclic aliphatic dihydroxy compound is disclosed.

### Background Art Document

#### Patent Document

Patent Document 1: Japanese Patent No. 3325560
Patent Document 2: International Publication No. 2006/41190
Patent Document 3: International Publication No. 2008/156186
Patent Document 4: International Publication No. 2010/64721
Patent Document 5: JP-A-2012-031369 (the term "JP-A" as used herein means an "unexamined published Japanese patent application")
Patent Document 6: JP-A-2005-77963

### Summary of Invention

#### Problem that Invention is to Solve

However, according to the technique disclosed in Patent Document 6, due to an excessively large difference in the glass transition temperature between a polycarbonate resin and a polyether ester resin or a polystyrene-based

resin, these resins are non-uniformly mixed at the time of mixing by an extruder, as a result, the product film becomes uneven, making it difficult to obtain a product with stable quality.

According to the techniques disclosed in Patent Documents 2 to 5, melt film formation may be possible, but stretching properties are insufficient to further reduce the film thickness.

An object of the present invention is to solve those conventional problems and provide a polycarbonate resin composition with excellent stretching properties, which allows for melt film formation and becomes a material of a retardation film having a reverse wavelength dispersion property, and a transparent film formed of the polycarbonate resin composition.

Means for Solving Problem

As a result of many intensive studies to attain the above-described object, the present inventors have found that those conventional problems can be solved by a polycarbonate resin composition comprising a polycarbonate resin containing a fluorene-containing dihydroxy compound, and a resin having a specific composition and differing from the polycarbonate resin above. The present invention has been accomplished based on this finding.

That is, the gist of the present invention resides in the following [1] to [12].

[1] A transparent film obtained by molding a polycarbonate resin composition comprising (A) a polycarbonate resin containing (a) a structural unit derived from a dihydroxy compound represented by the following formula (1) and (b) a structural unit derived from a dihydroxy compound having an ether ring, and (B) a resin having a composition different from that of said polycarbonate resin (A), with the absolute value of the difference in the glass transition temperature from said polycarbonate resin (A) being 80°C or less and the absolute value of the difference in the refractive index being 0.02 or less, wherein said polycarbonate resin composition contains from 0.1 to 10 parts by weight of said resin (B) per 100 parts by weight of said polycarbonate resin (A) and in the transparent film, the ratio of the retardation R450 measured at a wavelength of 450 nm to the retardation R550 measured at a wavelength of 550 nm satisfies the following formula (I):

[Chem. 1]

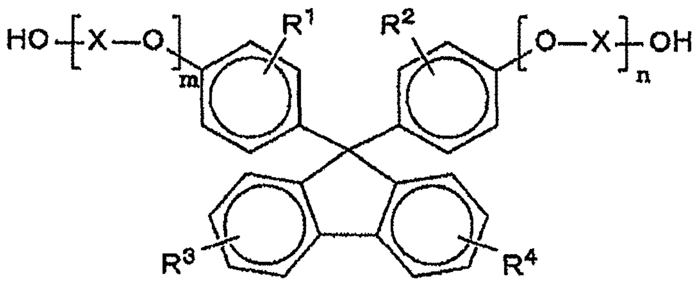

(1)

(wherein in formula (1), each of $R^1$ to $R^4$ independently represents a hydrogen atom, a substituted or unsubstituted alkyl group having a carbon number of 1 to 20, a substituted or unsubstituted cycloalkyl group having a carbon number of 6 to 20, or a substituted or unsubstituted aryl group having a carbon number of 6 to 20, X represents a substituted or unsubstituted alkylene group having a carbon number of 2 to 10, a substituted or unsubstituted cycloalkylene group having a carbon number of 6 to 20, or a substituted or unsubstituted arylene group having a carbon number of 6 to 20, and each of m and n is independently an integer of 0 to 5); and

$$0.5<R450/R550<1.0 \quad (I)$$

[2] The transparent film described in the above [1], wherein said resin (B) has a glass transition temperature lower than the glass transition temperature of said polycarbonate resin (A).

[3] The transparent film described in the above [1] or [2], wherein the glass transition temperature of said polycarbonate resin (A) is from 100 to 160°C.

[4] The transparent film described in any one of the above [1] to [3], wherein the glass transition temperature of said resin (B) is from 75 to 160°C.

[5] The transparent film described in any one of the above [1] to [4], wherein when the structural unites derived from

all dihydroxy compounds constituting said polycarbonate resin (A) are assumed to be 100 mol%, the ratio of said structural unit (a) is 10 mol% or more.

[6] The transparent film described in any one of the above [1] to [5], which is obtained by molding said polycarbonate resin composition by a melt film-forming method at a molding temperature of 265°C or less.

[7] The transparent film described in any one of the above [1] to [6], which is stretched at least in one direction.

[8] A polycarbonate resin composition comprising (A) a polycarbonate resin containing (a) a structural unit derived from a dihydroxy compound represented by the following formula (1) and (b) a structural unit derived from a dihydroxy compound having an ether ring, and (B) a resin having a composition different from that of said polycarbonate resin (A), with the absolute value of the difference in the refractive index from said polycarbonate resin (A) being 0.02 or less, wherein

when structural units derived from all dihydroxy compounds constituting said polycarbonate resin (A) is assumed to be 100 mol%, the ratio of said structural unit (a) is 10 mol% or more,

the glass transition temperature of said polycarbonate resin (A) is from 100 to 160°C, and

said polycarbonate resin composition contains from 0.1 to 10 parts by weight of said resin (B) per 100 parts by weight of said polycarbonate resin (A):

[Chem. 2]

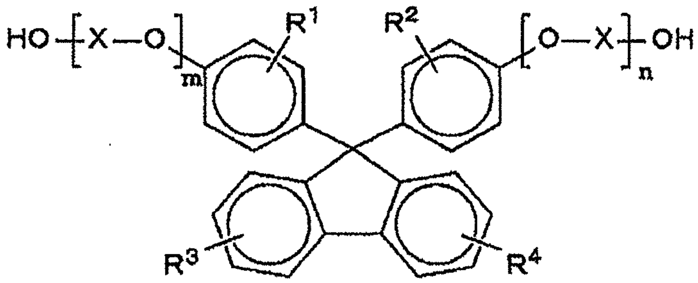

(1)

(wherein in formula (1), each of $R^1$ to $R^4$ independently represents a hydrogen atom, a substituted or unsubstituted alkyl group having a carbon number of 1 to 20, a substituted or unsubstituted cycloalkyl group having a carbon number of 6 to 20, or a substituted or unsubstituted aryl group having a carbon number of 6 to 20, X represents a substituted or unsubstituted alkylene group having a carbon number of 2 to 10, a substituted or unsubstituted cycloalkylene group having a carbon number of 6 to 20, or a substituted or unsubstituted arylene group having a carbon number of 6 to 20, and each of m and n is independently an integer of 0 to 5).

[9] The polycarbonate resin composition described in the above [8], wherein the melt viscosity of said polycarbonate resin (A) as measured at a temperature of 240°C and a shear rate of 91.2 $sec^{-1}$ is from 500 to 3,500 Pa•sec.

[10] The polycarbonate resin composition described in the above [8] or [9], wherein said resin (B) is a styrene-based resin or an aromatic polycarbonate resin.

[11] The polycarbonate resin composition described in any one of the above [8] to [10], wherein the molar ratio between the structural unit (a) and the structural unit (b) of said polycarbonate resin (A) is from 20:80 to 80:20.

[12] The polycarbonate resin composition described in any one of the above [8] to [11], wherein said polycarbonate resin (A) contains (c) a structural unit derived from one or more kinds of dihydroxy compounds selected from the group consisting of a dihydroxy compound represented by the following formula (2), a dihydroxy compound represented by the following formula (3), a dihydroxy compound represented by the following formula (4), and a dihydroxy compound represented by the following formula (5):

$$HO\text{-}R^5\text{-}OH \qquad (2)$$

(wherein in formula (2), $R^5$ represents a substituted or unsubstituted cycloalkylene group having a carbon number of 4 to 20);

$$HO\text{-}CH_2\text{-}R^6\text{-}CH_2\text{-}OH \qquad (3)$$

(wherein in formula (3), $R^6$ represents a substituted or unsubstituted cycloalkylene group having a carbon number of 4 to 20);

$$H\text{-}(O\text{-}R^7)_p\text{-}OH \qquad (4)$$

(wherein in formula (4), $R^7$ represents a substituted or unsubstituted alkylene group having a carbon number of 2 to 10, and p represents an integer of 2 to 100); and

$$HO\text{-}R^8\text{-}OH \qquad (5)$$

(wherein in formula (5), $R^8$ represents a substituted or unsubstituted alkylene group having a carbon number of 2 to 20, or a group having a substituted or unsubstituted acetal ring).

Advantageous Effect of the Invention

The polycarbonate resin composition above can improve melt processability and stretchability without impairing optical properties and transparency and furthermore, contributes to enhancement of the yield by reducing the trouble that a film is ruptured at the time of melt film formation or stretching.

Mode for Carrying Out Invention

The present invention is described in detail below. The present invention is not limited to the embodiments described below and can be practiced by making various modifications therein within the scope of the gist.

[1] Polycarbonate resin (A)

The polycarbonate resin (A) is a polycarbonate resin containing (a) a structural unit derived from a dihydroxy compound represented by the following formula (1) and (b) a structural unit derived from a dihydroxy compound having an ether ring. In the present invention, a plurality of kinds of polycarbonate resins coming under the polycarbonate resin (A) may be used in combination.

[Chem. 3]

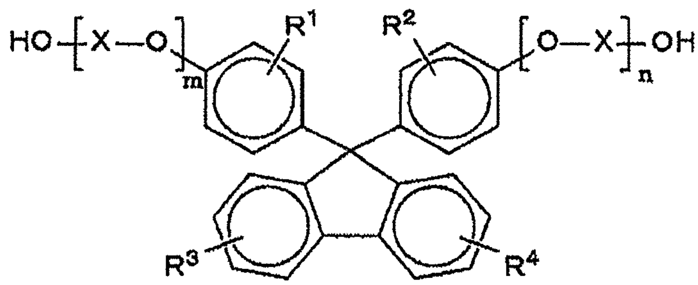

(1)

(wherein in formula (1), each of $R^1$ to $R^4$ independently represents a hydrogen atom, a substituted or unsubstituted alkyl group having a carbon number of 1 to 20, a substituted or unsubstituted cycloalkyl group having a carbon number of 6 to 20, or a substituted or unsubstituted aryl group having a carbon number of 6 to 20, X represents a substituted or unsubstituted alkylene group having a carbon number of 2 to 10, a substituted or unsubstituted cycloalkylene group having a carbon number of 6 to 20, or a substituted or unsubstituted arylene group having a carbon number of 6 to 20, and each of m and n is independently an integer of 0 to 5).

The "substituted or unsubstituted" as used herein means "having a substituent or not having a substituent".

<Dihydroxy Compound Represented by Formula (1)>

Examples of the dihydroxy compound represented by formula (1) include 9,9-bis(4-hydroxyphenyl)fluorene, 9,9-bis(4-hydroxy-3-methylphenyl)fluorene, 9,9-bis(4-hydroxy-3-ethylphenyl)fluorene, 9,9-bis(4-hydroxy-3-n-propylphenyl)fluorene, 9,9-bis(4-hydroxy-3-isopropylphenyl)fluorene, 9,9-bis(4-hydroxy-3-n-butylphenyl)fluorene, 9,9-bis(4-hydroxy-3-sec-butylphenyl)fluorene, 9,9-bis(4-hydroxy-3-tert-butyllphenyl)fluorene, 9,9-bis(4-hydroxy-3-cyclohexylphenyl)fluorene, 9,9-bis(4-hydroxy-3-phenylphenyl)fluorene, 9,9-bis(4-(2-hydroxyethoxy)phenyl)fluorene, 9,9-bis(4-(2-hydroxyethoxy)-3-methylphenyl)fluorene, 9,9-bis(4-(2-hydroxyethoxy)-3-isopropylphenyl)fluorene, 9,9-bis(4-(2-hydroxyethoxy)-3-isobutylphenyl)fluorene, 9,9-bis(4-(2-hydroxyethoxy)-3-tert-butylphenyl)fluorene, 9,9-bis(4-(2-hydroxyethoxy)-3-cyclohexylphenyl)fluorene, 9,9-bis(4-(2-hydroxyethoxy)-3-phenylphenyl)fluorene, 9,9-bis(4-(2-hydroxyethoxy)-3,5-dimethylphenyl)fluorene, 9,9-bis(4-(2-hydroxyethoxy)-3-tert-butyl-6-methylphenyl)fluorene, and 9,9-bis(4-(3-hydroxy-2,2-dimethylpropoxy)phenyl)fluorene, and preferred are 9,9-bis(4-hydroxy-3-methylphenyl)fluorene, 9,9-bis(4-(2-hydroxyethoxy)phenyl)fluorene and 9,9-bis(4-(2-hydroxyethoxy)-3-methylphenyl)fluorene. Among those, the dihydroxy compound represented by formula (1) is especially preferably 9,9-bis(4-(2-hydroxyethoxy)phenyl)fluorene.

<Dihydroxy Compound Having Ether Ring>

As the dihydroxy compound having an ether ring, a dihydroxy compound having a structure containing an oxygen atom incorporated into a cyclic structure by an ether bond, such as tetrahydrofuran structure, tetrahydropyran structure, dioxane structure and dioxolane structure, may be used. In such a dihydroxy compound, the number of oxygen atoms incorporated into an ether ring may be sufficient if it is 1 or more in the dihydroxy compound above, and a number more than one is preferred. In addition, the number of ether rings may also be sufficient if it is 1 or more, and in view of heat resistance improvement or optical properties, a number more than one is preferred. Incidentally, the "ether ring" in the "dihydroxy compound having an ether ring" indicates a ring having an ether group in the cyclic structure and having a structure where the carbon constituting the cyclic chain is an aliphatic carbon.

Specific examples of the dihydroxy compound having an ether ring include an anhydrous sugar alcohol typified by isosorbide, isomannide and isoidide, and a dioxane structure-containing compound typified by dioxane glycol and spiroglycol. One of these may be used alone, or two or more thereof may be used in combination. Among these dihydroxy compounds, in view of availability, handling and reactivity during polymerization as well as color hue, heat resistance and optical properties of the polycarbonate obtained, isosorbide, dioxane glycol and spiroglycol are preferred, isosorbide and spiroglycol are more preferred, and isosorbide obtained from a plant-derived raw material is most preferred because of its carbon neutrality.

In the present invention, by containing a dihydroxy compound having an ether ring, the melt processability, stretchability, heat resistance and strength can be enhanced, in addition to the optical properties required of the retardation film, such as retardation developability and low photoelastic coefficient.

In the present invention, when structural units derived from all dihydroxy compounds constituting the polycarbonate resin (A) are assumed to be 100 mol%, the ratio of the structural unit (a) derived from a dihydroxy compound represented by the following formula (1) is preferably 10 mol% or more, more preferably 15 mol% or more, still more preferably 20 mol% or more, yet still more preferably 25 mol% or more, and most preferably 30 mol% or more. Among others, a ratio of 33 mol% or more is preferred. If the ratio is less than 10 mol%, a retardation film fabricated using the polycarbonate resin composition may not exhibit a reverse wavelength dispersion property.

In addition, if the ratio is too high, the film may also not exhibit a reverse wavelength dispersion property. Therefore, the upper limit of the ratio is preferably 80 mol% or less, more preferably 70 mol% or less, still more preferably 60 mol% or less, yet still more preferably 50 mol% or less, even yet still more preferably 48 mol% or less.

The molar ratio between the structural unit (a) and the structural unit (b) in the polycarbonate resin (A) is preferably from 20:80 to 80:20, more preferably from 25:75 to 60:40, still more preferably from 30:70 to 55:45. When the molar ratio between the structural unit (a) and the structural unit (b) is in the specific range above, a polycarbonate resin composition excellent in the optical properties, heat resistance and other various physical properties can be easily obtained.

The polycarbonate resin (A) may contain (c) a structural unit derived from one or more kinds of dihydroxy compounds selected from the group consisting of a dihydroxy compound represented by formula (2), a dihydroxy compound represented by formula (3), a dihydroxy compound represented by formula (4), and a dihydroxy compound represented by formula (5):

$$HO\text{-}R^5\text{-}OH \qquad (2)$$

(wherein in formula (2), $R^5$ represents a substituted or unsubstituted cycloalkylene group having a carbon number of 4 to 20);

$$HO\text{-}CH_2\text{-}R^6\text{-}CH_2\text{-}OH \qquad (3)$$

(wherein in formula (3), $R^6$ represents a substituted or unsubstituted cycloalkylene group having a carbon number of 4 to 20);

$$H\text{-}(O\text{-}R^7)_p\text{-}OH \qquad (4)$$

(wherein in formula (4), $R^7$ represents a substituted or unsubstituted alkylene group having a carbon number of 2 to 10, and p is an integer of 2 to 100);

$HO-R^8-OH$ (5)

(wherein in formula (5), $R^8$ represents a substituted or unsubstituted alkylene group having a carbon number of 2 to 20, or a group having a substituted or unsubstituted acetal ring).

<Dihydroxy Compound Represented by Formula (2)>

The dihydroxy compound represented by formula (2) includes cycloalkylenediols typified by cyclopentanediol and cyclohexanediol. By using the dihydroxy compound represented by formula (2), the toughness can be improved when the obtained polycarbonate resin composition is formed into a film. In addition, the compound usually includes a compound containing a 5-membered ring structure or a 6-membered ring structure. Thanks to the 5-membered ring structure or 6-membered ring structure, the heat resistance of the obtained polycarbonate resin composition can be increased. The 6-membered ring structure may be fixed in a chair or boat form by covalent bonding. Specifically, the compound includes 1,2-cyclopentanediol, 1,3-cyclopentanediol, 1,2-cyclohexanediol, 1,3-cyclohexanediol, 1,4-cyclohexanediol, 2-methyl-1,4-cyclohexanediol, etc.

<Dihydroxy Compound Represented by Formula (3)>

The dihydroxy compound represented by formula (3) includes cycloalkylenedimethanols typified by cyclopentanedimethanol and cyclohexanedimethanol. By using the dihydroxy compound represented by formula (3), the toughness can be improved when the obtained polycarbonate resin composition is formed into a film. In addition, $R^6$ in formula (3) usually encompasses various isomers represented by the following formula (6). Specifically, the isomers include 1,2-cyclohexanedimethanol, 1,3-cyclohexanedimethanol, 1,4-cyclohexanedimethanol, etc.

[Chem. 4]

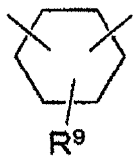

(6)

(wherein in formula (6), $R^9$ represents a hydrogen atom or a substituted or unsubstituted alkyl group having a carbon number of 1 to 12).

Among specific examples of the dihydroxy compound above, in view of flexibility, stretching properties and heat resistance of the obtained polycarbonate resin composition, cyclohexanedimethanols are preferred, and 1,4-cyclohexanedimethanol, 1,3-cyclohexanedimethanol and 1,2-cyclohexanedimethanol are more preferred because of their availability and ease of handling.

These exemplified compounds are an example of the dihydroxy compound above, and the compound that can be used is not limited thereto. One of these dihydroxy compounds represented by formula (3) may be used alone, or two or more thereof may be mixed and used.

<Dihydroxy Compound Represented by Formula (4)>

The dihydroxy compound represented by formula (4) includes, for example, polyoxyalkylene glycols such as diethylene glycol, triethylene glycol, polyethylene glycol, dipropylene glycol, tripropylene glycol, polypropylene glycol and polytrimethylene glycol. The dihydroxy compound represented by formula (4) is excellent in the reactivity during polymerization and by using this dihydroxy compound, the toughness can be improved when the obtained polycarbonate resin composition is formed into a film. Among the dihydroxy compounds represented by formula (4), diethylene glycol, triethylene glycol and a polyethylene glycol having a number average molecular weight of 150 to 2,000 are preferably used, and diethylene glycol is more preferred. One of these dihydroxy compounds represented by formula (4) may be used alone, or two or more thereof may be mixed and used.

<Dihydroxy Compound Represented by Formula (5)>

The dihydroxy compound represented by formula (5) specifically includes ethylene glycol, 1,3-propanediol, 1,4-butanediol, 1,6-hexanediol, neopentyl glycol, etc. Among these, 1,3-propanediol, 1,4-butanediol and 1,6-hexanediol are preferred.

The content of the structural unit (c) is not particularly limited but is preferably from 0.1 to 20 parts by weight per 100 parts by weight of the total of the structural units (a) and (b). When the content of the structural unit (c) is in the specific range above, flexibility can be imparted to the obtained polycarbonate resin composition, and a film excellent in the toughness can be easily obtained.

If the content of the structural unit (c) is less than 0.1 parts by weight, the obtained polycarbonate resin composition becomes insufficient in the flexibility and when formed into a film, poor toughness may result. For this reason, the content of the structural unit (c) is preferably 0.5 parts by weight or more, more preferably 1 part by weight or more, still more preferably 3 parts by weight or more. On the other hand, if the content of the structural unit (c) exceeds 20 parts by weight, the optical properties, heat resistance and other various physical properties of the obtained polycarbonate resin composition may be deteriorated. For this reason, the content of the structural unit (c) is preferably 18 parts by weight or less, more preferably 16 parts by weight or less, still more preferably 14 parts by weight or less, yet still more preferably 10 parts by weight of less.

<Other Copolymerization Components>

The polycarbonate resin (A) may contain, for example, a structural unit derived from bisphenols, etc., other than the structural unit (a). Such bisphenols include, for example, 2,2-bis(4-hydroxyphenyl)propane [=bisphenol A], 2,2-bis(4-hydroxy-3,5-dimethylphenyl)propane, 2,2-bis(4-hydroxy-3,5-diethylphenyl)propane, 2,2-bis(4-hydroxy-(3,5-diphenyl)phenyl)propane, 2,2-bis(4-hydroxy-3,5-dibromophenyl)propane, 2,2-bis(4-hydroxyphenyl)pentane, 2,4'-dihydroxydiphenylmethane, bis(4-hydroxyphenyl)methane, bis(4-hydroxy-5-nitrophenyl)methane, 1,1-bis(4-hydroxyphenyl)ethane, 3,3-bis(4-hydroxyphenyl)pentane, 1,1 -bis(4-hydroxyphenyl)cyclohexane, bis(4-hydroxyphenyl)sulfone, 2,4'-dihydroxydiphenylsulfone, bis(4-hydroxyphenyl)sulfide, 4,4'-dihydroxydiphenyl ether, 4,4'-dihydroxy-3,3'-dichlorodiphenyl ether, and 4,4'-dihydroxy-2,5-diethoxydiphenyl ether. These bisphenols may be used in an appropriate amount according to the balance of various physical properties such as heat resistance and optical properties, but if the proportion of the structural unit derived from bisphenols in the polycarbonate resin (A) becomes large, optical properties may be impaired, for example, the photoelastic coefficient may become high. For this reason, the content is preferably 20 parts by weight or less, more preferably 10 parts by weight or less, still more preferably 5 parts by weight or less, yet still more preferably 3 parts by weight or less, per 100 parts by weight of the total of the structural units (a) and (b), and above all, it is preferable not to contain the bisphenols.

[Production Method of Polycarbonate Resin (A)]

The polycarbonate resin (A) can be produced by a polymerization method employed in general, and the polymerization method may be either a solution polymerization method using phosgene or a melt polymerization method of reacting the compounds with a carbonic acid diester, but a melt polymerization method not allowing a solvent residue to remain in the polycarbonate resin is preferred.

The carbonic acid diester used in the melt polymerization method usually includes a carbonic acid diester represented by the following formula (7):

[Chem. 5]

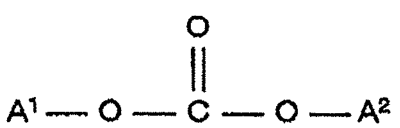

(7)

(wherein in formula (7), each of $A^1$ and $A^2$ independently represents a substituted or unsubstituted aliphatic group having a carbon number of 1 to 18, or a substituted or unsubstituted aromatic group having a carbon number of 6 to 18).

The carbonic acid diester represented by formula (7) includes, for example, diaryl carbonates typified by diphenyl carbonate, ditolyl carbonate, bis(chlorophenyl)carbonate, m-cresyl carbonate, dinaphthyl carbonate and bis(biphenyl)carbonate, and dialkyl carbonates typified by dimethyl carbonate, diethyl carbonate, dibutyl carbonate and dicyclohexyl carbonate. Among these, diaryl carbonates are preferably used, and diphenyl carbonate is more preferably used. One of these carbonic acid diesters may be used alone, or two or more thereof may be mixed and used.

In addition, as the polycarbonate resin (A) for use in the present invention, a polyester carbonate where a part of the carbonate bond derived from the carbonic acid diester above is substituted by a dicarboxylic acid structure may also be used. The dicarboxylic acid compound forming the above-described dicarboxylic acid structure includes, for example, an aromatic dicarboxylic acid such as terephthalic acid, phthalic acid, isophthalic acid, 4,4'-diphenyldicarboxylic acid, 4,4'-diphenyl ether dicarboxylic acid, 4,4'-benzophenonedicarboxylic acid, 4,4'-diphenoxyethanedicarboxylic acid, 4,4'-diphenylsulfonedicarboxylic acid and 2,6-naphthalenedicarboxylic acid, an alicyclic dicarboxylic acid such as 1,2-cyclohexanedicarboxylic acid, 1,3-cyclohexanedicarboxylic acid and 1,4-cyclohexanedicarboxylic acid, and an aliphatic dicarboxylic acid such as malonic acid, succinic acid, glutaric acid, adipic acid, pimelic acid, suberic acid, azelaic acid and sebacic acid. In view of heat resistance and thermal stability of the obtained polymer, an aromatic dicarboxylic acid is preferred; in view of ease of handling or availability, terephthalic acid and isophthalic acid are more preferred; and terephthalic acid is still more preferred. These dicarboxylic acid components may be used as a dicarboxylic acid itself for the raw material of the polyester carbonate resin above, but according to the production method, a dicarboxylic acid ester such as methyl ester form and phenyl ester form, or a dicarboxylic acid derivative such as dicarboxylic acid halide, may also be used for the raw material.

In the polyester carbonate resin above, when the total of structural units derived from all dihydroxy compounds and structural units derived from all carboxylic acid compounds is assumed to be 100 mol%, the content ratio of the structural unit derived from the dicarboxylic acid compound is preferably 45 mol% or less, more preferably 40 mol% or less. If the content ratio of the dicarboxylic acid compound exceeds 45 mol%, polymerizability is reduced, and the polymerization may not proceed until the desired molecular weight is achieved.

The carbonic acid diester is preferably used in a molar ratio of 0.90 to 1.10, more preferably from 0.96 to 1.04, based on all dihydroxy compounds used for the reaction. If this molar ratio is less than 0.90, the terminal hydroxyl group of the produced polycarbonate is increased, and thermal stability of the polymer may be deteriorated or a desired high-molecular-weight polymer may not be obtained. Also, if the molar ratio exceeds 1.10, not only the transesterification reaction rate may be decreased under the same conditions, making it difficult to produce a polycarbonate resin having a desired molecular weight, but also the amount of a residual carbonic acid diester in the produced polycarbonate resin may be increased, which is disadvantageous in that the residual carbonic acid diester may cause an odor during molding or in a molded article.

As the polymerization catalyst (transesterification catalyst) in the melt polymerization, an alkali metal compound and/or an alkaline earth metal compound are used. Together with an alkali metal compound and/or an alkali metal compound, a basic compound such as basic boron compound, basic phosphorus compound, basic ammonium compound and amine-based compound may be used in combination, but it is particularly preferred to use only an alkali metal compound and/or an alkaline earth metal compound.

The alkali metal compound used as the polymerization catalyst includes, for example, sodium hydroxide, potassium hydroxide, lithium hydroxide, cesium hydroxide, sodium hydrogencarbonate, potassium hydrogencarbonate, lithium hydrogencarbonate, cesium hydrogencarbonate, sodium carbonate, potassium carbonate, lithium carbonate, cesium carbonate, sodium acetate, potassium acetate, lithium acetate, cesium acetate, sodium stearate, potassium stearate, lithium stearate, cesium stearate, sodium borohydride, potassium borohydride, lithium borohydride, cesium borohydride, sodium borophenylate, potassium borophenylate, lithium borophenylate, cesium borophenylate, sodium benzoate, potassium benzoate, lithium benzoate, cesium benzoate, disodium hydrogenphosphate, dipotassium hydrogenphosphate, dilithium hydrogenphosphate, dicesium hydrogenphosphate, disodium phenylphosphate, dipotassium phenylphosphate, dilithium phenylphosphate, dicesium phenylphosphate, an alcoholate or phenolate of sodium, potassium, lithium and cesium, and disodium, dipotassium, dilithium and dicesium salts of bisphenol A.

The alkaline earth metal compound includes, for example, calcium hydroxide, barium hydroxide, magnesium hydroxide, strontium hydroxide, calcium hydrogencarbonate, barium hydrogencarbonate, magnesium hydrogencarbonate, strontium hydrogencarbonate, calcium carbonate, barium carbonate, magnesium carbonate, strontium carbonate, calcium acetate, barium acetate, magnesium acetate, strontium acetate, calcium stearate, barium stearate, magnesium stearate, and strontium stearate. Among these, in view of polymerization activity, a magnesium compound and a calcium compound are preferred. In the description of the present invention, the terms "alkali metal" and "alkaline earth metal" are used as terms respectively having the same meanings as "Group 1 element" and "Group 2 element" in the long-form periodic table (Nomenclature of Inorganic Chemistry IUPAC Recommendations 2005).

One of these alkali metal compounds and/or alkaline earth metal compounds may be used alone, or two or more thereof may be used in combination.

Specific examples of the basic boron compound used in combination with the alkali metal compound and/or alkaline earth metal compound include sodium, potassium, lithium, calcium, barium, magnesium and strontium salts of tetramethylboron, tetraethylboron, tetrapropylboron, tetrabutylboron, trimethylethylboron, trimethylbenzylboron, trimethylphenylboron, triethylmethylboron, triethylbenzylboron, triethylphenylboron, tributylbenzylboron, tributylphenylboron, tetraphenylboron, benzyltriphenylboron, methyltriphenylboron and butyltriphenylboron.

The basic phosphorus compound includes, for example, triethylphosphine, tri-n-propylphosphine, triisopropylphosphine, tri-n-butylphosphine, triphenylphosphine, tributylphosphine, and a quaternary phosphonium salt.

The basic ammonium compound includes, for example, tetramethylammonium hydroxide, tetraethylammonium hydroxide, tetrapropylammonium hydroxide, tetrabutylammonium hydroxide, trimethylethylammonium hydroxide, trimethylbenzylammonium hydroxide, trimethylphenylammonium hydroxide, triethylmethylammonium hydroxide, triethylbenzylammonium hydroxide, triethylphenylammonium hydroxide, tributylbenzylammonium hydroxide, tributylphenylammonium hydroxide, tetraphenylammonium hydroxide, benzyltriphenylammonium hydroxide, methyltriphenylammonium hydroxide, and butyltriphenylammonium hydroxide.

The amine-based compound includes, for example, 4-aminopyridine, 2-aminopyridine, N,N-dimethyl-4-aminopyridine, 4-diethylaminopyridine, 2-hydroxypyridine, 2-methoxypyridine, 4-methoxypyridine, 2-dimethylaminoimidazole, 2-methoxyimidazole, imidazole, 2-mercaptoimidazole, 2-methylimidazole, and aminoquinoline.

One of these basic compounds also may be used alone, or two or more thereof may be used in combination.

In the case where an alkali metal compound and/or an alkaline earth metal compound is used, the amount of the polymerization catalyst above used is, in terms of metal, usually from 0.1 to 100 μmol, preferably from 0.5 to 50 μmol, more preferably from 1 to 25 μmol, per mol of all dihydroxy compounds used for the reaction. If the amount of the polymerization catalyst used is too small, polymerization activity necessary for producing a polycarbonate resin having a desired molecular weight is not obtained, and on the other hand, if the amount of the polymerization catalyst used too large, the color hue of the polycarbonate resin obtained may be deteriorated or a by-product may be produced to reduce the flowability or cause many gel occurrences, making it difficult to produce the polycarbonate resin (A) of desired quality.

In producing the above polycarbonate resin (A), the dihydroxy compound represented by formula (1) may be supplied as a solid, may be heated and then supplied in a molten state, or may be supplied as a solution obtained by previously dissolving the compound in other raw materials.

In addition, other dihydroxy compounds used as needed, e.g., a dihydroxy compound having an ether ring, a dihydroxy compound represented by formula (2), a dihydroxy compound represented by formula (3), a dihydroxy compound represented by formula (4) and a dihydroxy compound represented by formula (5), may also be supplied as a solid, may be heated and then supplied in a molten state, or when soluble in water, may be supplied in the form of an aqueous solution.

The method for reacting a dihydroxy compound represented by formula (1) and other dihydroxy compounds used as needed, with a carbonic acid diester in the presence of a polymerization catalyst is usually performed by a multistage process consisting of two or more stages. Specifically, the reaction in the first stage is performed at a temperature of 130 to 240°C, preferably from 150 to 230°C, for 0.1 to 10 hours, preferably from 0.5 to 3 hours. In the second and subsequent stages, the reaction temperature is raised while gradually lowering the pressure of the reaction system from the pressure in the first stage, and the polycondensation reaction is performed while removing concurrently occurring monohydroxy compounds, such as phenol, out of the reaction system, where finally, the temperature is from 210 to 280°C and the pressure of the reaction system is 200 Pa or less.

In the polycondensation reaction, it is important to control the balance of the temperature and the pressure in the reaction system. In particular, if either one of temperature and pressure is too early changed, an unreacted monomer may be distilled out of the reaction system, and the molar ratio between the dihydroxy compound and the carbonic acid diester may be changed, leading to a decrease in the polymerization rate, or in the case of using a plurality of dihydroxy compounds, the molar ratio among the dihydroxy compounds may be changed, failing in obtaining desired optical properties. For example, in the case where 9,9-bis(4-(2-hydroxyethoxy)phenyl)fluorene is used as the dihydroxy compound represented by formula (1) and isosorbide is used as the dihydroxy compound having an ether ring, isosorbide still in the unreacted state is likely to distill out of the reaction system due to its relatively low boiling point. Therefore, in this case, it is preferred that the reaction rate is raised under reduced pressure of about 13 kPa in terms of the pressure in the reaction system until the proportion of the unreacted isosorbide in the reaction solution is reduced to about 1 wt% or less, and thereafter, the polycondensation reaction is performed under a pressure of 200 Pa or less at a temperature of 200 to 280°C, preferably from 210 to 260°C. Because, a polycarbonate resin (A) sufficiently increased in the polymerization degree is obtained.

In addition, when a reflux condenser is disposed in a reaction vessel used for the polymerization reaction and the monohydroxy compound occurring from the carbonic acid diester and distilling out of the reaction system is partially returned to the reaction vessel, distillation off of the unreacted monomer contained in the distillate is suppressed and the polymerization can be stably performed.

The mode of the reaction may be any method of a batch system, a continuous system, and a combination of batch system and continuous system.

In producing the polycarbonate resin (A) by a melt polymerization method, a heat stabilizer may be added. By adding the conventionally known hindered phenol-based heat stabilizer and/or phosphorus-based heat stabilizer, coloring

during polymerization can be reduced and in turn, the color hue of the obtained resin can be improved. In addition, by adding these heat stabilizers, the molecular weight can be prevented from decreasing at the time of molding, etc.

The hindered phenol-based compound specifically includes, for example, 2,6-di-tert-butylphenol, 2,4-di-tert-butylphenol, 2-tert-butyl-4-methoxyphenol, 2-tert-butyl-4,6-dimethylphenol, 2,6-di-tert-butyl-4-methylphenol, 2,6-di-tert-butyl-4-ethylphenol, 2,5-di-tert-butylhydroquinone, n-octadecyl-3-(3',5'-di-tert-butyl-4'-hydroxyphenyl)propionate, 2-tert-butyl-6-(3'-tert-butyl-5'-methyl-2'-hydroxybenzyl)-4-methylphenyl acrylate, 2,2'-methylene-bis-(4-methyl-6-tert-butylphenol), 2,2'-methylene-bis-(6-cyclohexyl-4-methylphenol), 2,2'-ethylidene-bis-(2,4-di-tert-butylphenol), tetrakis-[methylene-3-(3',5'-di-tert-butyl-4'-hydroxyphenyl)propionate]-methane, and 1,3,5-trimethyl-2,4,6-tris-(3,5-di-tert-butyl-4-hydroxybenzyl)benzene. In particular, tetrakis-[methylene-3-(3',5'-di-tert-butyl-4'-hydroxyphenyl)propionate]-methane, n-octadecyl-3-(3',5'-di-tert-butyl-4'-hydroxyphenyl)propionate and 1,3,5-trimethyl-2,4,6-tris-(3,5-di-tert-butyl-4-hydroxybenzyl)benzene are mentioned.

Examples of the phosphorous acid, the phosphoric acid, the phosphonous acid, the phosphonic acid, and the ester thereof specifically includes triphenyl phosphite, tris(nonylphenyl)phosphite, tris(2,4-di-tert-butylphenyl)phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, bis(2,6-di-tert-butyl-4-methylphenyl)pentaerythritol diphosphite, 2,2-methylenebis(4,6-di-tert-butylphenyl)octyl phosphite, bis(nonylphenyl)pentaerythritol diphosphite, bis(2,4-di-tert-butylphenyl)pentaerythritol diphosphite, distearyl pentaerythritol diphosphite, tributyl phosphate, triethyl phosphate, trimethyl phosphate, triphenyl phosphate, diphenylmonoorthoxenyl phosphate, dibutyl phosphate, dioctyl phosphate, diisopropyl phosphate, tetrakis(2,4-di-tert-butylphenyl) 4,4'-biphenylenediphosphinate, dimethyl benzenephosphonate, diethyl benzenephosphonate, and dipropyl benzenephosphonate. Among these, trisnonylphenyl phosphite, trimethyl phosphate, tris(2,4-di-tert-butylphenyl)phosphite, bis(2,4-di-tert-butylphenyl)pentaerythritol diphosphite, bis(2,6-di-tert-butyl-4-methylphenyl)pentaerythritol diphosphite and dimethyl benzenephosphonate are preferably used.

One of these heat stabilizers may be used alone, or two or more thereof may be used in combination.

As for such a heat stabilizer, for example, in the case of forming a film by using an extruder such as melt extrusion method, the film may be formed by adding the heat stabilizer and the like to the extruder, or the heat stabilizer and the like may be previously added to the resin composition by using a stabilizer or may be added during melt polymerization. Also, the heat stabilizer may be additionally compounded by the above-described method, in addition to the amount of the heat stabilizer added during melt polymerization. That is, when the heat stabilizer is compounded after obtaining the objective polymer of the present invention, the heat stabilizer can be compounded in a larger amount while avoiding increase in haze, coloration and reduction in heat resistance, and the color hue can be prevented from deterioration.

The compounding amount of the heat stabilizer is preferably from 0.0001 to 1 part by weight, more preferably from 0.0005 to 0.5 parts by weight, still more preferably from 0.001 to 0.2 parts by weight, per 100 parts by weight of the polycarbonate resin (A).

Furthermore, in the polycarbonate resin (A), a commonly known antioxidant may also be compounded for the purpose of preventing oxidation.

The antioxidant includes, for example, one member or two or more members of pentaerythritol tetrakis(3-mercaptopropionate), pentaerythritol tetrakis(3-laurylthiopropionate), glycerol-3-stearylthiopropionate, triethylene glycol-bis[3-(3-tert-butyl-5-methyl-4-hydroxyphenyl)propionate], 1,6-hexanediol-bis[3-(3,5-di-tert-butyl-4-hydroxyphenyl)propionate], pentaerythritol-tetrakis[3-(3,5-di-tert-butyl-4-hydroxyphenyl)propionate], octadecyl-3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylenebis(3,5-di-tert-butyl-4-hydroxy-hydrocinnamide), diethyl 3,5-di-tert-butyl-4-hydroxybenzylphosphonate, tris(3,5-di-tert-butyl-4-hydroxybenzyl)isocyanurate, tetrakis(2,4-di-tert-butylphenyl) 4,4'-biphenylenediphosphinate, and 3,9-bis{1,1-dimethyl-2-[β-(3-tert-butyl-4-hydroxy-5-methylphenyl)propionyloxy]ethyl}-2,4,8,10-tetraoxaspiro(5,5)undecane.

The compounding amount of the antioxidant is preferably from 0.0001 to 0.5 parts by weight per 100 parts by weight of the polycarbonate resin (A).

[Physical Properties of Polycarbonate Resin (A)]

<Glass Transition Temperature>

The glass transition temperature of the polycarbonate resin (A) is preferably from 100 to 160°C, more preferably from 110 to 155°C, still more preferably from 120 to 150°C. If the glass transition temperature is excessively low, the heat resistance tends to be deteriorated, leaving the possibility of causing a dimensional change after film molding, or when the film is laminated as a retardation film to a polarizing plate, the image quality may be degraded. If the glass transition temperature is excessively high, the melt molding stability at the time of film molding may be deteriorated, or the mixing property with the resin (B) may be bad to impair the transparency of the film or impair the stretchability.

The glass transition temperature of the polycarbonate resin (A) is measured by the method described in Examples later.

<Reduced Viscosity>

The molecular weight of the polycarbonate resin (A) can be expressed by the reduced viscosity. The reduced viscosity of the polycarbonate resin (A) is determined, as described in Examples later, by precisely adjusting the polycarbonate resin (A) concentration to 0.6 g/dL with use of methylene chloride as a solvent and measuring the viscosity by means of an Ubbelohde viscosity tube at a temperature of 20.0°C±0.1°C. The reduced viscosity of the polycarbonate resin (A) is not particularly limited but is preferably 0.25 dL/g or more, more preferably 0.30 dL/g or more, still more preferably 0.35 dL/g or more. The upper limit of the reduced viscosity is preferably 1.20 dL/g or less, more preferably 1.00 dL/g or less, still more preferably 0.80 dL/g or less, yet still more preferably 0.60 dL/g or less, even yet still more preferably 0.50 dL/g or less. If the reduced viscosity of the polycarbonate resin (A) is less than the lower limit above, there is a possibility that the mechanical strength of the molded article is reduced and the stretchability is bad to cause a rupture at the time of stretching or result in uneven stretching. On the other hand, if the reduced viscosity exceeds the upper limit above, this may cause a problem that the flowability at the time of molding is reduced and in turn, the productivity is lowered, or there is a possibility that an extraneous matter, etc. in the polycarbonate resin (A) can be hardly removed by filtration, making it difficult to reduce the extraneous matter content, or an air bubble is mixed at the time of molding to deteriorate the quality of the molded article.

<Melt Viscosity>

The melt viscosity of the polycarbonate resin (A) as measured at a temperature of 240°C and a shear rate of 91.2 $sec^{-1}$ is preferably from 500 to 3,500 Pa•sec, more preferably from 1,000 to 3,000 Pa•sec, still more preferably from 1,500 to 2,700 Pa•sec.

If the melt viscosity of the polycarbonate resin (A) is less than the lower limit above, there is a possibility that the mechanical strength of the molded article is decreased or the stretchability is bad to cause a rupture at the time of stretching or result in uneven stretching. On the other hand, if the melt viscosity exceeds the upper limit above, this may cause a problem that the flowability at the time of molding is reduced and in turn, the productivity is lowered, or there is a possibility that an air bubble is mixed in the molded article at the time of molding to deteriorate the outer appearance of the molded article or an extraneous matter in the polycarbonate resin (A) can be hardly removed by filtration, etc. The melt viscosity of the polycarbonate resin (A) is measured by the method described in Examples later.

[2] Resin (B)

As regards the resin (B), the absolute value of the difference in the refractive index from the polycarbonate resin (A) is 0.02 or less, preferably 0.01 or less, more preferably 0.008 or less, still more preferably 0.005 or less. If the absolute value of the difference in the refractive index exceeds 0.02, the film obtained by molding the polycarbonate resin composition comes to have high haze and low light transmittance, which is disadvantageous in that the image may be reduced in the sharp feel and when the same brightness is sought for on the screen, the power consumption of the display device may increase. Here, in the case of using a plurality of polycarbonate resins (A) and/or a plurality of resins (B), the absolute value of the difference in the refractive index between the polycarbonate resin (A) and the resin (B) as used in the present invention indicates a numerical value when the combination of resins gives a largest numerical value of difference.

In addition, the absolute value of the difference between the glass transition temperature of the polycarbonate resin (A) and the glass transition temperature of the resin (B) is preferably 80°C or less. If the glass transition temperature is significantly different between two resins and the absolute value of the difference is large, one resin may not be melted at the time of melt mixing or due to a large difference in the melt viscosity therebetween, the dispersibility may be deteriorated, the haze of a film obtained by molding the polycarbonate resin composition may be high, or the effect of improving the stretchability may not be obtained. The absolute value of the difference in the glass transition temperature is more preferably 60°C or less, still more preferably 50°C or less. Here, in the case of using a plurality of polycarbonate resins (A) and/or a plurality of resins (B), the absolute value of the difference in the glass transition temperature between the polycarbonate resin (A) and the resin (B) as used in the present invention indicates a numerical value when the combination of resins gives a largest numerical value of difference.

The glass transition temperature of the resin (B) is preferably the same as or lower than the glass transition temperature of the polycarbonate resin (A), more preferably lower than the glass transition temperature of the polycarbonate resin (A). The polycarbonate resin composition of the present invention is stretched at a temperature near the glass transition temperature of the polycarbonate resin (A) so as to impart optical performance and therefore, when the

glass transition temperature of the resin (B) is lower than the glass transition temperature of the polycarbonate resin (A), the domain of the resin (B) finely dispersed in the polycarbonate resin (A) can absorb strain at the time of stretching to prevent stretch rupturing or uneven stretching.

Specifically, the glass transition temperature of the resin (B) is preferably from 75 to 160°C, more preferably from 80 to 145°C, still more preferably from 90 to 120°C. If the glass transition temperature is less than 75°C, at the time of melt film formation of the polycarbonate resin composition, the resin may adhere to a chill roll to deteriorate the outer appearance of the obtained film. If the glass transition temperature exceeds 160°C, the melt molding stability during film molding may be deteriorated and in addition, the above-described effect of improving the stretchability may not be obtained or the transparency of the film may be impaired.

The resin (B) is preferably amorphous. If the resin is crystalline, the resin (B) in the polycarbonate resin composition may be crystallized to increase the haze of a film obtained by molding the polycarbonate resin composition.

Preferred examples of the resin (B) include a styrene-based resin, and an aromatic polycarbonate resin containing a bisphenol structure, etc. From the standpoint of not impairing the reverse wavelength dispersion property when the polycarbonate resin composition of the present invention is formed into a retardation film, a styrene-based resin is preferred. The styrene-based resin includes, for example, a resin of styrene alone, and a copolymerized resin of styrene and, as the comonomer, α-methylstyrene, hydroxystyrene, acrylonitrile, methyl methacrylate, methyl acrylate, N-phenylmaleimide, maleic anhydride, etc. Two or more kinds of these comonomers may be copolymerized so as to adjust the refractive index. The aromatic polycarbonate resin includes, for example, a resin of bisphenol A alone, and a copolymerized resin of bisphenol A and, as the comonomer, the following dihydroxy compound.

A biphenyl compound such as 4,4'-biphenol, 2,4'-biphenol, 3,3'-dimethyl-4,4'-dihydroxy-1,1'-biphenyl, 3,3'-dimethyl-2,4'-dihydroxy-1,1'-biphenyl, 3,3'-di-(tert-butyl)-4,4'-dihydroxy-1,1'-biphenyl, 3,3',5,5'-tetramethyl-4.,4'-dihydroxy-1,1'-biphenyl, 3,3',5,5'-tetra-(tert-butyl)-4,4'-dihydroxy-1,1'-diphenyl and 2,2',3,3',5,5'-hexamethyl-4,4'-dihydroxy-1,1'-biphenyl.

A bisphenol compound such as bis-(4-hydroxy-3,5-dimethylphenyl)methane, bis-(4-hydroxyphenyl)methane, bis-(4-hydroxy-3-methylphenyl)methane, 1,1-bis(4-hydroxyphenyl)ethane, 1,1-bis-(4-hydroxyphenyl)propane, 2,2-bis-(4-hydroxyphenyl)propane, 2,2-bis-(4-hydroxy-3-methylphenyl)propane, 2,2-bis-(4-hydroxyphenyl)butane, 2,2-bis-(4-hydroxyphenyl)pentane, 2,2-bis-(4-hydroxyphenyl)-3-methylbutane, 2,2-bis-(4-hydroxyphenyl)hexane, 2,2-bis-(4-hydroxyphenyl)-4-methylpentane, 1,1-bis-(4-hydroxyphenyl)cyclopentane, 1,1-bis-(4-hydroxyphenyl)cyclohexane, bis-(3-phenyl-4-hydroxyphenyl)methane, 1,1-bis-(3-phenyl-4-hydroxyphenyl)ethane, 1,1-bis-(3-phenyl-4-hydroxyphenyl)propane, 2,2-bis-(3-phenyl-4-hydroxyphenyl)propane, 1,1-bis-(4-hydroxy-3-methylphenyl)ethane, 2,2-bis-(4-hydroxy-3-ethylphenyl)propane, 2,2-bis-(4-hydroxy-3-isopropylphenyl)propane, 2,2-bis-(4-hydroxy-3-sec-butylphenyl)propane, 1,1-bis-(4-hydroxy-3,5-dimethylphenyl)ethane, 2,2-bis-(4-hydroxy-3,5-dimethylphenyl)propane, 1,1-bis-(4-hydroxy-3,6-dimethylphenyl)ethane, bis-(4-hydroxy-2,3,5-trimethylphenyl)methane, 1,1-bis-(4-hydroxy-2,3,5-trimethylphenyl)ethane, 2,2-bis-(4-hydroxy-2,3,5-trimethylphenyl)propane, bis-(4-hydroxy-2,3,5-trimethylphenyl)phenylmethane, 1,1-bis-(4-hydroxy-2,3,5-trimethylphenyl)phenylethane, 1,1-bis-(4-hydroxy-2,3,5-trimethylphenyl)cyclohexane, bis-(4-hydroxyphenyl)phenylmethane, 1,1-bis-(4-hydroxyphenyl)-1-phenylethane, 1,1-bis-(4-hydroxyphenyl)-1-phenylpropane, bis-(4-hydroxyphenyl)diphenylmethane, bis-(4-hydroxyphenyl)dibenzylmethane, 4,4'-[1,4-phenylenebis(1-methylethylidene)]bis-[phenol], 4,4'-[1,4-phenylenebismethylene]bis-[phenol], *4,4'-[1,4-phenylenebis(1-methylethylidene)]bis-[2,6-dimethylphenol], 4,4'-[1,4-phenylenebismethylene]bis-[2,6-dimethylphenol], 4,4'-[1,4-phenylenebismethylene]bis-[2,3,6-trimethylphenol], 4,4'-[1,4-phenylenebis(1-methylethylidene)]bis-[2,3,6-trimethylphenol], 4,4'-[1,3-phenylenebis(1-methylethylidene)]bis-[2,3,6-trimethylphenol], 4,4'-dihydroxydiphenyl ether, 4,4'-dihydroxydiphenyl sulfone, 4,4'-dihydroxydiphenyl sulfide, 3,3',5,5'-tetramethyl-4,4'-dihydroxydiphenyl ether, 3,3',5,5'-tetramethyl-4,4'-dihydroxydiphenyl sulfone, 3,3',5,5'-tetramethyl-4,4'-dihydroxydiphenyl sulfide, phenolphthalein, 4,4'-[1,4-phenylenebis(1-methylvinylidene)]bisphenol, 4,4'-[1,4-phenylenebis(1-methylvinylidene)]bis[2-methylphenol], (2-hydroxyphenyl)(4-hydroxyphenyl)methane, (2-hydroxy-5-methylphenyl)(4-hydroxy-3-methylphenyl)methane, 1,1-(2-hydroxyphenyl)(4-hydroxyphenyl)ethane, 2,2-(2-hydroxyphenyl)(4-hydroxyphenyl)propane and 1,1-(2-hydroxyphenyl)(4-hydroxyphenyl)propane.

A halogenated bisphenol compound such as 2,2-bis(3,5-dibromo-4-hydroxyphenyl)propane and 2,2-bis(3,5-dichloro-4-hydroxyphenyl)propane.

Among these dihydroxy compounds, preferred as the comonomer are bis-(4-hydroxy-3,5-dimethylphenyl)methane, bis-(4-hydroxyphenyl)methane, bis-(4-hydroxy-3-methylphenyl)methane, 1,1-bis-(4-hydroxyphenyl)ethane, 2,2-bis-(4-hydroxyphenyl)propane, 2,2-bis-(4-hydroxy-3-methylphenyl)propane, 2,2-bis-(4-hydroxy-3,5-dimethylphenyl)propane, 1,1 -bis-(4-hydroxyphenyl)cyclohexane, bis-(4-hydroxyphenyl)phenylmethane, 1,1-bis-(4-hydroxyphenyl)-1-phenylethane, 1,1-bis-(4-hydroxyphenyl)-1-phenylpropane, bis-(4-hydroxyphenyl)diphenylmethane, 2-hydroxyphenyl(4-hydroxyphenyl)methane and 2,2-(2-hydroxyphenyl)(4-hydroxyphenyl)propane.

The content of the resin (B) is from 0.1 to 10 parts by weight per 100 parts by weight of the polycarbonate resin (A). If the content is less than 0.1 parts by weight, the effect of enhancing the stretching properties cannot be sufficiently obtained. If the content exceeds 10 parts by weight, the wavelength dispersion of the obtained film is greatly different

from the wavelength dispersion of the film obtained only from the polycarbonate resin (A), and optical compensation in the visible region cannot be achieved. In addition, the haze of the obtained film may be increased. Among others, in the case where the resin (B) is a styrene-based resin having an aromatic ring as a structural unit or an aromatic carbonate resin, if the content of the resin (B) is large, the resin tends to cause an increase in the haze because of its low affinity for a structural unit derived from an ether ring-containing dihydroxy compound contained in the polycarbonate resin (A). The content of the resin (B) is preferably from 0.5 to 8 parts by weight, more preferably from 1 to 6 part by weight, still more preferably from 2 to 5 parts by weight, per 100 parts by weight of the polycarbonate resin (A). In the present invention, a plurality of polycarbonate resins coming under the resin (B) may be used in combination.

Since the domain of the resin (B) finely dispersed in the polycarbonate resin (A) absorbs strain at the time of stretching to prevent stretch rupturing or uneven stretching as described above, when the polycarbonate resin composition of the present invention is molded into a film, it is preferable for the microdomain to configure a so-called sea-island structure by using the polycarbonate resin (A) as the sea and the resin (B) as the island. For forming a sea-island structure, what is important is that the affinity between the polycarbonate resin (A) and the resin (B) is not excessively high. The island is usually in a circular or elliptic shape and the size thereof is not particularly limited, but if the size is too large, the effect of improving the stretchability is reduced. For this reason, the short diameter is preferably 5 μm or less, more preferably 3 μm or less, still more preferably 1 μm or less. The size of the island can be controlled by the composition of the polycarbonate resin (A), the composition of the resin (B), the melt-kneading method, etc.

The sea-island structure can be observed by a transmission electron microscope, if desired, after dyeing with osmium tetroxide, etc.

[3] Polycarbonate Resin Composition

The polycarbonate resin composition can be produced by mixing the polycarbonate resin (A) and the resin (B) simultaneously or in an arbitrary order by means of a mixer such as tumbler, V-blender, Nauta mixer, Banbury mixer, kneading roll and extruder. Among others, kneading by a twin-screw extruder is preferred for adequately dispersing the resin (B) in the polycarbonate resin (A) so as to enhance the transparency and stretchability while maintaining the productivity.

(Other Additives)

<Ultraviolet Absorber>

An ultraviolet absorber may be blended for the purpose of further improving the weather resistance of the polycarbonate resin composition and transparent film above. This ultraviolet absorber includes, for example, 2-(2'-hydroxy-5'-tert-octylphenyl)benzotriazole, 2-(3-tert-butyl-5-methyl-2-hydroxyphenyl)-5-chlorobenzotriazole, 2-(5-methyl-2-hydroxyphenyl)benzotriazole, 2-[2-hydroxy-3,5-bis(α,α-dimethylbenzyl)phenyl]-2H-benzotriazole, 2,2'-methylenebis(4-cumyl-6-benzotriazolephenyl), and 2,2'-p-phenylenebis(1,3-benzoxazin-4-one). As for the melting point of the ultraviolet absorber, those having a melting point of 120 to 250°C are preferred. When an ultraviolet absorber having a melting point of 120°C or more is used, fogging of the transparent film surface due to a gas is reduced and improved. Specifically, a benzotriazole-based ultraviolet absorber such as 2-(2'-hydroxy-5'-methylphenyl)benzotriazole, 2-(2'-hydroxy-3'-tert-butyl-5'-methylphenyl)-5-chlorobenzotriazole, 2-[2'-hydroxy-3'-(3 ",4",5",6"-tetrahydrophthalimidomethyl)-5'-methylphenyl]benzotriazole, 2,2-methylenebis[4-(1,1,3,3-tetramethylbutyl)-6-(2H-benzotriazol-2-yl)phenol] and 2-(2-hydroxy-3,5-dicumylphenyl)benzotriazole is used, and among these, 2-(2-hydroxy-3,5-dicumylphenyl)benzotriazole and 2,2-methylenebis[4-(1,1,3,3-tetramethylbutyl)-6-(2H-benzotriazol-2-yl)phenol] are preferred. One of these ultraviolet absorbers may be used alone, or two or more thereof may be used in combination. As for the blending amount of the ultraviolet absorber, the ultraviolet absorber is preferably blended in a ratio of 0.0001 to 1 part by weight, more preferably from 0.0005 to 0.5 parts by weight, still more preferably from 0.001 to 0.2 parts by weight, per 100 parts by weight of the polycarbonate resin composition. In such a range, the weather resistance of the transparent film can be enhanced without causing bleed-out of the ultraviolet absorber to the surface or reduction in the mechanical properties.

<Hindered Amine-Based Light Stabilizer>

In addition, a hindered amine-based light stabilizer can be blended for the purpose of further improving the weather resistance of the polycarbonate resin composition and transparent film above. The hindered amine-based light stabilizer includes, for example, bis(2,2,6,6-tetramethyl-4-piperidyl)sebacate, bis(1,2,2,6,6-pentamethyl-4-piperidyl)sebacate, poly[[6-(1,1,3,3-tetramethylbutyl)amino-1,3,5-triazine-2,4-diyl][(2,2,6,6-tetramethyl-4-piperidyl)imino]hexamethylene[(2,2,6,6-tetramethyl-4-piperidyl)imino]], an N,N'-bis(3-aminopropyl)ethylenediamine-2,4-bis[N-butyl-N-(1,2,2,6,6-pentamethyl-4-piperidyl)amino]-6-chloro-1,3,5-triazine condensate, and a polycondensate of dibutylamine,

1,3,5-triazine or N,N-bis(2,2,6,6)-tetramethyl-4-piperidyl-1,6-hexamethylenediamine with N-(2,2,6,6-tetramethyl-4-piperidyl)butylamine. Among these, bis(2,2,6,6-tetramethyl-4-piperidyl)sebacate and bis(1,2,2,6,6-pentamethyl-4-piperidyl)sebacate are preferred.

As for the blending amount of the hindered amine-based light stabilizer, the hindered amine-based light stabilizer is preferably blended in a ratio of 0.001 to 1 part by weight, more preferably from 0.005 to 0.5 parts by weight, still more preferably from 0.01 to 0.2 parts by weight, per 100 parts by weight of the polycarbonate resin composition. By blending the hindered amine-based light stabilizer within such a range, the weather resistance of the molded article obtained by molding the polycarbonate resin composition can be enhanced without causing bleed-out of the hindered amine-based light stabilizer to the surface of the polycarbonate resin composition or reduction in the mechanical properties of various molded articles.

The method and timing of mixing the polycarbonate resin composition with the above-described additives, etc. used in an embodiment of the present invention are not particularly limited. For example, the additive may be added in the course of polymerization reaction of the polycarbonate resin, etc. or after the completion of polymerization reaction and furthermore, may be added in the state of the polycarbonate resin being melted, e.g., in the course of kneading of the polycarbonate resin, etc. In addition, the additive may also be blended with the polycarbonate resin in the state of a solid such as pellet or powder and then kneaded by means of an extruder, etc. Furthermore, melting and blending of the polycarbonate resin (A), the resin (B) and the above-described additives used as needed may be concurrently executed in an extruder at the time of film forming.

[4] Transparent Film

The transparent film is obtained by molding the polycarbonate resin composition above into a film shape.

[Production Method of Transparent Film]

<Film-Forming Method of Transparent Film>

The method for producing the transparent film by using the polycarbonate resin composition above is not particularly limited, and various film-forming methods, e.g., a melt film-forming method such as T-die molding method and inflation molding method, a cast coating method, a calender molding method, a heat press method, a co-extrusion method, a co-melting method, and an inflation molding method, can be used. Among these film-forming methods, a melt film-forming method is preferably used in view of productivity, and among the melt film forming methods, a T-die molding method and an inflation molding method are more preferably used.

In the case of molding the transparent film by a melt film-forming method, the molding temperature is preferably 265°C or less, more preferably 260°C or less, still more preferably 258°C or less. If the molding temperature is too high, a defect due to an extraneous matter in the transparent film or generation of an air bubble may be increased, or the transparent film may be colored. However, if the molding temperature is too low, a transparent film may be hardly molded, and it may be difficult to produce a transparent film having a uniform thickness. Therefore, the lower limit of the molding temperature is usually 200°C or more, preferably 210°C or more, more preferably 220°C or more.

Here, the molding temperature of the transparent film means a temperature at the time of molding in a melt film-forming method and usually indicates a value obtained by measuring the resin temperature at the die outlet from which the molten resin is extruded.

<Stretching Method>

The transparent film is preferably a film stretched at least in one direction as described above. As the method for stretching the transparent film, an arbitrary appropriate stretching method is employed according to the purpose, and one of various stretching methods such as free-end stretching, fixed-end stretching, free-end shrinkage and fixed-end shrinkage may be used alone, or these methods may be used simultaneously or successively. Preferable methods include, for example, a transverse uniaxial stretching method, a longitudinal and transverse simultaneous biaxial stretching method, and a longitudinal and transverse successive biaxial stretching method. As the stretching device, an arbitrary appropriate stretching machine such as tenter stretching machine and biaxial stretching machine may be used.

As for the stretching temperature of the transparent film, an appropriate value may be arbitrarily selected according to the purpose. The transparent film is preferably stretched at a temperature ranging from a temperature 20°C lower than the glass transition temperature of the polycarbonate resin composition to a temperature 30°C higher than the glass transition temperature. In order to develop the desired retardation or stably perform the stretching without rupturing the film, the stretching temperature is more preferably from a temperature 10°C lower than to a temperature 20°C higher than the glass transition temperature, still more preferably from a temperature 5°C lower than to 15°C higher

than the glass transition temperature.

The stretch ratio of the transparent film may be appropriately selected according to the purpose. The stretch ratio is preferably from more than 1 times to 6 times, more preferably from more than 1.5 times to 4 times, still more preferably from more than 1.8 times to 3 times.

[Thickness of Transparent Film]

The thickness of the transparent film may be appropriately selected depending on use or stretch conditions such as stretch ratio but is preferably 200 μm or less, more preferably 150 μm or less, still more preferably 100 μm or less. If the thickness is large, the amount of the material used is increased and the uniformity is difficult to control, as a result, the film may not be applicable to a device requiring accuracy, thinness and homogeneity.

The lower limit of the thickness of the transparent film is preferably 20 μm or more, more preferably 30 μm or more. If the thickness is excessively small, the film may be hard to handle and in turn, wrinkles may be generated during the production, or lamination to another film or sheet such as protective film may be difficult to execute, whereas if the thickness is excessively large, a larger amount of a resin may be required for producing a film having the same area, which is inefficient, or the thickness of a product using the film may be increased.

[Physical Properties of Transparent Film]

<Birefringence>

In the transparent film obtained by molding the polycarbonate resin composition above, the birefringence is preferably 0.001 or more. In order to design the film molded using the polycarbonate resin composition to have a very small thickness, the birefringence is preferably higher. Accordingly, the birefringence is more preferably 0.002 or more. If the birefringence is less than 0.001, the thickness of the film must be made excessively large, leading to an increase in the amount of the material used and a rise in the cost, and in addition, control of homogeneity in terms of thickness, transparency and retardation becomes difficult. Therefore, when the birefringence is less than 0.001, the transparent film produced using the polycarbonate resin composition may not be applicable to a device requiring accuracy, thinness and homogeneity.

<Refractive Index>

In the transparent film obtained by molding the polycarbonate resin above, the refractive index at the wavelength of sodium d line (589 nm) is preferably from 1.57 to 1.60. If this refractive index is less than 1.57, the birefringence may become too small. On the other hand, if the refractive index exceeds 1.60, the reflectance may be increased to decrease the light transmission.

In the transparent film above, the refractive indices nx and ny in two directions in a plane and the refractive index nz in the thickness direction preferably satisfy any one relationship of the following formulae (II) to (IV):

$$nx>ny=nz \qquad (II)$$

$$nx>ny>nz \qquad (III)$$

$$nx>nz>ny \qquad (IV)$$

When the refractive indices have the relationship of nx>ny=nz, a uniaxial retardation film such as λ plate, λ/2 plate and λ/4 plate is obtained, and the film can be used in a viewing angle compensator of a liquid crystal display or for color correction of reflected light in a reflective or transflective display, an organic EL device, etc.

When the refractive indices have the relationship of nx>ny>nz, the film can be used as a viewing angle compensator of a liquid crystal display, particularly as a viewing angle compensator in the VA mode, which is of a type performing compensation by one sheet or of a type performing compensation by two sheets. In addition, the film may also be used as a film for color correction of reflected light, similarly to the above.

When the refractive indices have the relationship of nx>nz>ny, the film can be used as a viewing angle correction film of a polarizing plate or as a viewing angle correction film of a circularly polarizing plate and, similarly to the above,

can be used as a film for color correction of reflected light. In addition, not only the front viewing angle but also other viewing angles can be compensated.

In the transparent film above, the refractive indices nx and ny in two directions in a plane, the refractive index nz in the thickness direction, and the thickness d preferably satisfy the following relationships (V) and (VI):

$$\text{NZ Coefficient}=(nx-nz)/(nx-ny)=0.2 \text{ to } 8 \qquad (V)$$

$$\Delta nd=(nx-ny)\bullet d=30 \text{ to } 400 \text{ nm} \qquad (VI)$$

By setting the NZ coefficient to the range above, a retardation film for viewing angle compensation or a retardation film for color correction, which are used in various displays, can be produced.

If the NZ coefficient is less than 0.2, a very special production method is required, as a result, there may arise a problem that the NZ coefficient accuracy is poor and the productivity is reduced.

If the NZ coefficient exceeds 8, Rth=(nx-nz)-d becomes very large, and the thickness of a material must be increased, as a result, there may arise a problem that the material cost rises or the retardation reliability is reduced.

By setting the Δnd to the range above, a λ/2 plate or a λ/4 plate can be easily fabricated.

If the Δnd is less than 30 nm, this is the region of C-plate that is a so-called negatively uniaxial retardation film. Viewing angle compensation of a display cannot be executed by C-plate alone and requires another retardation film and therefore, the total number of retardation films increases, as a result, there may arise a problem that a small layer thickness or a low cost is difficult to achieve.

If the Δnd exceeds 400 nm, the thickness must be increased so as to develop a high retardation, and this may give rise to reduction in the productivity or reliability.

<Retardation>

In the transparent film above, the ratio (R450/R550) of the retardation R450 measured at a wavelength of 450 nm to the retardation R550 measured at a wavelength of 550 nm preferably satisfies the following formula (I), and R450/R550 is more preferably from 0.7 to less than 1.0, still more preferably from 0.75 to less than 0.97, yet still more preferably from 0.80 to less than 0.93:

$$0.5<R450/R550<1.0 \qquad (I)$$

When R450/R550 is in this range, the film develops a so-called reverse wavelength dispersion property of decreasing in the retardation as the wavelength of light is shorter, and ideal retardation characteristics can be obtained at each wavelength in the visible region. For example, when a retardation film having such wavelength dependency is produced as a 1/4λ plate and laminated to a polarizing plate, a circularly polarizing plate, etc. can be produced, and a polarizing plate and a display device, where the color hue is less wavelength-dependent and is neutral, can be realized. On the other hand, if the ratio above is out of the range specified, the color hue has a large wavelength dependency, and there arises a problem of coloring in a polarizing plate or a display device.

<Water Absorption Percentage>

The transparent film above preferably has a water absorption percentage of more than 1.0 wt%. When the water absorption percentage is more than 1.0 wt%, adhesiveness can be easily ensured when laminating the transparent film to another film, etc. For example, at the time of lamination to a polarizing plate, since the transparent film is hydrophilic, the contact angle of water is low, and free design of the adhesive is facilitated, so that high adhesion can be designed. If the water absorption percentage is 1.0 wt% or less, the film becomes hydrophobic, and the contact angle of water is high, making it difficult to design the adhesiveness. In addition, the film is readily charged, posing a problem of entrainment, etc. of an extraneous matter and increase in the appearance defect when incorporated into a polarizing plate or a display device.

On the other hand, if the water absorption percentage exceeds 2.0 wt%, the durability of optical properties in a humidity environment is disadvantageously deteriorated.

For this reason, in the transparent film, the water absorption percentage is preferably from more than 1.0 wt% to 2.0 wt%, more preferably from 1.1 to 1.5 wt%.

<Transmittance>

In the transparent film above, irrespective of the thickness, the total light transmittance of the transparent film itself is preferably 80% or more, and this transmittance is more preferably 90% or more. With a transmittance not less than the lower limit above, a less colored transparent film is obtained and its lamination to a polarizing plate provides a polarizing plate having a high degree of polarization and a high transmittance, so that when the polarizing plate is combined with a display device, a high display quality can be realized. Incidentally, the upper limit of the transmittance of the transparent film is not particularly limited, but the transmittance of a transparent film obtained using an actual production facility is usually 99% or less.

[Usage]

The transparent film above is not particularly limited in its usage but by making use of little variation of the retardation even in a long-term use under a high-temperature condition and excellent stability against temperature, is suitably used for an optical film such as retardation film employed in various liquid crystal display devices, mobile devices, etc.

For example, a polarizing plate can be fabricated by stacking the transparent film on a polarizer.

As the polarizer, known polarizers having various configurations can be employed. For example, a polarizer prepared by a conventionally known method of adsorbing iodine or a dichroic substance such as dichroic dye onto various films, thereby dyeing the film, and subjecting the film to crosslinking, stretching and drying, can be used.

Examples

The present invention is described in greater detail below by referring to Examples, but the present invention is not limited to these Examples as long as the gist thereof is observed.

In the following, the characteristic evaluations of the polycarbonate resin and transparent film were performed by the methods described below. Incidentally, the methods for characteristic evaluations are not limited to the following methods and can be appropriately selected by one skilled in the art.

[Evaluation of Polycarbonate Resin]

(1) Glass Transition Temperature (hereinafter, sometimes simply referred to as Tig)

Using a differential scanning calorimeter (DSC220, manufactured by SII Nano Technology), about 10 mg of the polycarbonate resin was heated at a temperature rise rate of 20°C/min and measured, and in conformity with JIS-K7121 (1987), an extrapolated glass transition initiation temperature that is a temperature at the intersection between a straight line drawn by extending the low temperature-side base line toward the high temperature side and a tangential line drawn at the point where the curve of the stepwise changing portion of glass transition has a maximum gradient, was determined and taken as the glass transition temperature.

(2) Reduced Viscosity

The reduced viscosity of the polycarbonate resin was measured at a temperature of 20.0°C±0.1°C by using an Ubbelohde viscosity tube manufactured by Moritomo Rika Kogyo and using methylene chloride as the solvent. The concentration was precisely adjusted to 0.6 g/dL.

The relative viscosity $\eta_{rel}$ was determined from the flow-through time to of the solvent and the flow-through time t of the solution according to the following formula:

$$\eta_{rel}=t/t_0$$

The specific viscosity $\eta_{sp}$ was determined from the relative viscosity $\eta_{rel}$ according to the following formula:

$$\eta_{sp}=(\eta-\eta_0)/\eta_0=\eta_{rel}-1$$

The reduced viscosity (converted viscosity) $\eta_{red}$ was determined by dividing the specific viscosity $\eta_{sp}$ by the

concentration c (g/dL) according to the following formula:

$$\eta_{red}=\eta_{sp}/c$$

A higher numerical value indicates a larger molecular weight.

(3) Melt Viscosity

The melt viscosity was measured at a temperature of 240°C and a shear rate of 91.2 $sec^{-1}$ by using a capillograph, Model CAPIROGRAPH 1B, manufactured by Toyo Seiki Seisaku-Sho, Ltd., under the conditions of an orifice length of 10 mm and an orifice diameter of 1 mm.

(4) Refractive Index

The refractive index nD at each wavelength was measured by using an Abbe refractometer ("DR-M4" manufactured by Atago Co., Ltd.) and using an interference filter at a wavelength of 589 nm (D line).

As the measurement sample, a polycarbonate resin (A) and a resin (B) having a composition different from that of the polycarbonate resin (A) were press-molded at 160 to 200°C to produce a film having a thickness of 80 to 500 μm, and the obtained film was cut into a strip shape having a width of about 8 mm and a length of 10 to 40 mm and used as the test specimen for measurement.

The measurement was performed at 20.0±0.1°C by using 1-bromonaphthalene as the interfacial solution.

[Evaluation of Polycarbonate Resin Composition]

(1) Film Formation

Films having a thickness of 100 μm and 180 μm were produced from the polycarbonate resin composition by using a film-forming apparatus equipped with a single-screw extruder (manufactured by Isuzu Kakoki, screw diameter: 25 mm, cylinder preset temperature: 220°C), a T-die (width: 200 mm, preset temperature: 220°C), a chill roll (preset temperature: from 120 to 130°C), and a winder.

(2) Tensile Test

The film having a thickness of 100 μm obtained in (1) above was cut out into a strip shape having a width of 20 mm and a length of 150 mm by using a safety razor and determined for the elongation at break and the yield stress by using a tensile tester (model: Strograph, manufactured by Toyo Seiki Seisaku Sho, Ltd.) with a thermostat bath and setting the temperature of the thermostat bath to glass transition temperature + 6°C.

The stress was determined by dividing the load from the tensile tester by the initial cross-sectional area of the test specimen. The strain was determined by dividing the travel distance of the tensile tester between chucks by the initial chuck-to-chuck distance. The initial chuck-to-chuck distance was set to 80 mm, and the travel distance between chucks (tensile speed) was set to 500 mm/min.

(3) Measurement of Water Absorption Percentage

The film having a thickness of 180 μm obtained in (1) above was cut into a 50-mm square and measured in conformity with JIS K7209 (1984) except for the thickness.

[Evaluation of Transparent Film]

(1) Stretching

The film having a thickness of 100 μm obtained in (1) Evaluation of Polycarbonate Resin Composition was cut into a width of 60 mm and a length of 100 mm, set on a biaxial stretching apparatus ("BIX-277-AL", manufactured by Island Kogyo Co., Ltd.), and 2-fold stretched in the longitudinal direction at glass transition temperature + 10°C. After the completion of stretching, the transparent film was taken out and cooled at room temperature.

(2) Film Thickness

The thickness was measured using a contact-type thickness meter manufactured under the product name of "Dial Thickness Gauge SM-1201" by Teclock corporation.

(3) Retardation

A sample prepared by cutting out the uniaxially stretched transparent film obtained in (1) above into a width of 4 cm and a length of 4 cm was measured at room temperature of 23°C for the retardation R450 at the wavelength of 450 nm and the retardation R550 at the wavelength of 550 nm by using a retardation measuring apparatus (product name: "KOBRA WRXY2020", manufactured by Oji Scientific Instruments). Then, the ratio (R450/R550) between the measured retardation R450 and retardation R550 was calculated.

(4) Haze

A sample prepared by cutting out the uniaxially stretched transparent film obtained in (1) above into a width of 4 cm and a length of 4 cm was measured for the haze of the film with a D65 light source by using a haze meter (NDH2000, manufactured by Nippon Denshoku Kogyo K.K.) in conformity with JIS K7105.

(5) Measurement of Domain Size of Resin (B)

The uniaxially stretched transparent film obtained in (1) above was subjected to a dyeing treatment with osmium tetroxide and then, according to a resin embedding method using an epoxy resin, the film was cut out in a direction parallel to the stretching direction to collect an ultrathin section. The cross-section of the collected section was observed by a transmission electron microscope (TEM).

[Production Example of Polycarbonate Resin (A)]

[Production Example 1]: Polycarbonate Resin A-1

Polymerization was performed using a batch polymerization apparatus composed of two vertical reaction vessels and equipped with a stirring blade and a reflux condenser controlled to 100°C. The reaction vessel was charged with 9,9-Bis(4-(2-hydroxyethoxy)phenyl)fluorene (hereinafter simply referred to as BHEPF), isosorbide (hereinafter simply referred to as ISB), diethylene glycol (hereinafter simply referred to as DEG), diphenyl carbonate (hereinafter simply referred to as DPC), and magnesium acetate to give a ratio, in terms of molar ratio, ofBHEPF/ISB/DEG/DPC/magnesium acetate = 0.348/0.490/0.162/1.005/1.00$\times$10$^{-5}$. After sufficiently purging the inside of the reaction vessel with nitrogen (oxygen concentration: from 0.0005 to 0.001 vol%), heating was performed with a heating medium, and at the point when the inner temperature reached 100°C, stirring was started. The inner temperature reached 220°C after 40 minutes from the start of temperature rise and while controlling the system to keep this temperature, pressure reduction was started, as a result, the pressure was reduced to 13.3 kPa in 90 minutes after reaching 220°C. A phenol vapor occurring as a byproduct along with the polymerization reaction was introduced into the reflux condenser at 100°C, and a slight amount of unreacted component contained in the phenol vapor was returned to the reaction vessel. The uncondensed phenol vapor was introduced into a condenser at 45°C and recovered.

After introducing nitrogen into the first reaction vessel to once return the pressure to atmospheric pressure, the oligomerized reaction solution in the first reaction vessel was transferred to the second reactor. Subsequently, temperature rise and pressure reduction in the second reaction vessel were started, as a result, the inner temperature and the pressure respectively reached 240°C and 0.2 kPa in 50 minutes. Thereafter, polymerization was allowed to proceed until a predetermined stirring power occurred. At the point when a predetermined power was achieved, the pressure was recovered by introducing nitrogen into the reaction vessel, and the reaction solution was withdrawn in the strand form and pelletized by a rotary cutter to obtain Polycarbonate Resin A-1 having a copolymerization composition of BHEPF/ISB/DEG = 34.8/49.0/16.2 [mol%]. Physical properties of the obtained polycarbonate resin are shown in Table 1.

[Production Example 2]: Polycarbonate Resin A-2

Production was performed in the same manner as in Production Example 1 except that in Production Example 1, BHEPF, ISB, DEG, DPC and magnesium acetate were changed to, in terms of molar ratio, BHEPF/ISB/polyethylene glycol having a molecular weight of 1,000 (hereinafter, simply referred to as PEG#1000)/DPC/magnesium acetate = 0.445/0.552/0.003/1.005/1.00$\times$10$^{-5}$. By this production, Polycarbonate Resin A-2 having a copolymerization composition

of BHEPF/ISB/PEG#1000 = 44.5/55.2/0.3 [mol%] was obtained. Physical properties of the obtained polycarbonate resin are shown in Table 1.

[Production Example 3]: Polycarbonate Resin A-3

Production was performed in the same manner as in Production Example 1 except that in Production Example 1, 9,9-bis(4-hydroxy-3-methylphenyl)fluorene (hereinafter, sometimes simply referred to as BCF), spiroglycol (hereinafter, sometimes simply referred to as SPG) and calcium acetate were used in a ratio, in terms of molar ratio, BCF/SPG/DPC/calcium acetate = 0.300/0.700/1.01/2.00$\times$10$^{-4}$ and the final polymerization temperature was set to 260°C. By this production, Polycarbonate Resin A-3 having a copolymerization composition of BCF/SPG = 30.0/70.0 [mol%] was obtained. Physical properties of the obtained polycarbonate resin are shown in Table 1.

[Table 1]

| | | Unit | Production Example 1 (Polycarbonate Resin A-1) | Production Example 2 (Polycarbonate Resin A-2) | Production Example 3 (Polycarbonate Resin A-3) |
|---|---|---|---|---|---|
| Structural unit (a) | BHEPF | mol% | 34.8 | 44.5 | - |
| | BCF | mol% | - | - | 30.0 |
| Structural unit (b) | ISB | mot% | 49.0 | 55.2 | - |
| | SPG | mol% | - | - | 70.0 |
| Other structural units | DEG | mol% | 16.2 | - | - |
| | PEG# 1000 | mol% | - | 0.3 | 0.3 |
| Molar ratio (a):(b) of structural unit (a) and structural unit (b) | | - | 41.5:58.5 | 44.6:55.4 | 30.0:70.0 |
| Reduced viscosity | | dL/g | 0.417 | 0.348 | 0.456 |
| Melt viscosity | | Pa•s | 2310 | 2500 | 2300 |
| Refractive index | | - | 1.5873 | 1.5956 | 1.5319 |
| Glass transition temperature | | °C | 127 | 145 | 135 |

[Example 1]

1 Part by weight of a polystyrene resin (G9504, produced by PS Japan Corporation) as the resin (B) was added to 100 parts by weight of Polycarbonate Resin (A-1) obtained in Production Example 1, and the mixture was extruded at a cylinder temperature of 240°C, a rotation speed of 150 rpm and a discharge rate of 15 kg/hr by using a twin-screw extruder (model: TEX30SST, manufactured by Japan Steel Works, Ltd.) to obtain a strand-shaped polycarbonate resin composition. The obtained polycarbonate resin composition was cut by a cutter to obtain a pellet of the polycarbonate resin composition. The pellet after kneading was transparent. A film for the measurement of stretching properties was prepared from the obtained pellet and evaluated for various physical properties described above. In the evaluation by a tensile test, a good tensile elongation at break was obtained. In the measurement of optical properties of the stretched film, the wavelength dispersion property R450/R550 was 0.91, and the haze was 0.4%, revealing that both optical properties and transparency were good. The short diameter of the domain of the resin (B) observed by TEM was 1 $\mu$m or less.

[Example 2]

The preparation and evaluation were performed in the same manner as in Example 1 except that in Example 1, the amount added of the polystyrene resin (G9504) was changed to 5 parts by weight. A higher tensile elongation at break than in Example 1 was obtained. The haze of the stretched film was 0.9% and was slightly higher than in Example 1, but the transparency was good. The short diameter of the domain of the resin (B) observed by TEM was 1 $\mu$m or less.

[Example 3]

The preparation and evaluation were performed in the same manner as in Example 1 except that a polystyrene resin (HF-77, produced by PS Japan Corporation) was used as the resin (B) and the amount added thereof was set to 1 part by weight. Both tensile properties and optical properties were good. The short diameter of the domain of the resin (B) observed by TEM was 1 μm or less.

[Example 4]

The preparation and evaluation were performed in the same manner as in Example 1 except that a polystyrene resin (HP-500M, produced by DIC Corporation) was used as the resin (B) and the amount added thereof was set to 1 part by weight. Both tensile properties and optical properties were good. The short diameter of the domain of the resin (B) observed by TEM was 1 μm or less.

[Example 5]

The preparation and evaluation were performed in the same manner as in Example 1 except that a polystyrene resin (G9001, produced by PS Japan Corporation) was used as the resin (B) and the amount added thereof was set to 1 part by weight. Both tensile properties and optical properties were good. The short diameter of the domain of the resin (B) observed by TEM was 1 μm or less.

[Example 6]

The preparation and evaluation were performed in the same manner as in Example 1 except that a polystyrene resin (POLYIMILEX PAS 1460, produced by Nippon Shokubai Co., Ltd.) was used as the resin (B) and the amount added thereof was set to 1 part by weight. The pellet after kneading was transparent, but the film after stretching became white turbid, reveling deterioration of the transparency. The domain of the resin (B) observed by TEM included those having a short diameter of 5 μm or more.

[Example 7]

The preparation and evaluation were performed in the same manner as in Example 1 except that an aromatic polycarbonate resin (NOVAREX 7022R, produced by Mitsubishi Engineering-Plastics Corporation) was used as the resin (B) and the amount added thereof was set to 1 part by weight. The short diameter of the domain of the resin (B) observed by TEM was 1 μm or less. Both tensile properties and optical properties were good.

[Example 8]

The preparation and evaluation were performed in the same manner as in Example 1 except that in Example 7, the amount added of the aromatic polycarbonate resin (7022R) was changed to 5 parts by weight. The short diameter of the domain of the resin (B) observed by TEM was 1 μm or less. The tensile properties and the transparency of stretched film were good, but the wavelength dispersion property R450/R550 was as high as 0.97.

[Comparative Example 1]

A film for the measurement of stretching properties was prepared using Polycarbonate Resin (A-1) obtained in Production Example 1 and evaluated for various physical properties described above.

[Comparative Example 2]

The preparation and evaluation were performed in the same manner as in Example 1 except that a polystyrene resin (SANREX SAN-H, produced by Techno Polymer Co., Ltd.) was used as the resin (B) and the amount added thereof was set to 1 part by weight. The pellet after kneading was white turbid, and the film after stretching also had high haze and thus showed bad transparency. The short diameter of the domain of the resin (B) observed by TEM was from 1 to 3 μm.

[Example 9]

The preparation and evaluation were performed in the same manner as in Example 1 except that in Example

1, Polycarbonate Resin (A-2) obtained in Production Example 2 was used in place of Polycarbonate resin (A-1) obtained in Production Example 1 and the amounts of Polycarbonate Resin (A-2) and polystyrene resin (G9504) added were set to 100 parts by weight and 1 part by weight, respectively. The short diameter of the domain of the resin (B) observed by TEM was 1 μm or less. Both tensile properties and optical properties were good.

[Example 10]

The preparation and evaluation were performed in the same manner as in Example 9 except that a polystyrene resin (HF-77) was used as the resin (B) and the amount added thereof was set to 1 part by weight. The short diameter of the domain of the resin (B) observed by TEM was 1 μm or less. Both tensile properties and optical properties were good.

[Example 11]

The preparation and evaluation were performed in the same manner as in Example 9 except that 1 par by weight of an aromatic polycarbonate resin (7022R) was used as the resin (B). The short diameter of the domain of the resin (B) observed by TEM was 1 μm or less. The tensile properties and the transparency of stretched film were good.

[Example 12]

The preparation and evaluation were performed in the same manner as in Example 9 except that 5 parts by weight of a polystyrene resin (G9504) was used as the resin (B). The short diameter of the domain of the resin (B) observed by TEM was 1 μm or less. Both tensile properties and optical properties were good.

[Example 13]

The preparation and evaluation were performed in the same manner as in Example 9 except that 8 parts by weight of a polystyrene resin (G9504) was used as the resin (B). The haze of the film was slightly increased. The short diameter of the domain of the resin (B) observed by TEM was from 1 to 3 μm.

[Example 14]

The preparation and evaluation were performed in the same manner as in Example 9 except that 10 parts by weight of a polystyrene resin (G9504) was used as the resin (B). The tensile properties were good, but the haze of the film was slightly increased. The short diameter of the domain of the resin (B) observed by TEM was 5 μm or more.

[Example 15]

The preparation and evaluation were performed in the same manner as in Example 9 except that 5 parts by weight of a polystyrene resin (MARUKA LYNCUR CST15, produced by Maruzen Petrochemical Co., Ltd.) was used as the resin (B). The short diameter of the domain of the resin (B) observed by TEM was 1 μm or less. Both tensile properties and optical properties were good.

[Example 16]

The preparation and evaluation were performed in the same manner as in Example 9 except that 5 parts by weight of a polystyrene resin (MARUKA LYNCUR CST50: a styrene-hydroxystyrene copolymer, produced by Maruzen Petrochemical Co., Ltd.) was used as the resin (B). The short diameter of the domain of the resin (B) observed by TEM was 1 μm or less. Both tensile properties and optical properties were good.

[Example 17]

The preparation and evaluation were performed in the same manner as in Example 9 except that 5 parts by weight of a polystyrene resin (MARUKA LYNCUR CST70, produced by Maruzen Petrochemical Co., Ltd.) was used as the resin (B). The short diameter of the domain of the resin (B) observed by TEM was 1 μm or less. Both tensile properties and optical properties were good.

[Comparative Example 3]

A film for the measurement of stretching properties was prepared using Polycarbonate Resin (A-2) obtained in Production Example 2 and evaluated for various physical properties described above.

[Comparative Example 4]

The preparation and evaluation were performed in the same manner as in Example 9 except that a polystyrene resin (SANREX SAN-H) was used as the resin (B) and the amount added thereof was set to 1 part by weight. The pellet after kneading was white turbid, and the film after stretching also had high haze and thus showed bad transparency. The short diameter of the domain of the resin (B) observed by TEM was from 1 to 3 μm.

[Comparative Example 5]

The preparation and evaluation were performed in the same manner as in Example 9 except that 20 parts by weight of a polystyrene resin (G9504) was used as the resin (B). The tensile properties were good, but the haze of the film was increased. The short diameter of the domain of the resin (B) observed by TEM was 5 μm or more.

[Example 18]

The preparation and evaluation were performed in the same manner as in Example 1 except that in Example 1, Polycarbonate Resin (A-3) obtained in Production Example 3 was used in place of Polycarbonate resin (A-1) obtained in Production Example 1 and the amounts of Polycarbonate Resin (A-3) and polystyrene resin (ESTYRENE MS-600, produced by Nippon Steel & Sumikin Chemical Co., Ltd.) added were set to 100 parts by weight and 1 part by weight, respectively. The short diameter of the domain of the resin (B) observed by TEM was 1 μm or less. Both tensile properties and optical properties were good.

[Example 19]

The preparation and evaluation were performed in the same manner as in Example 18 except that 5 parts by weight of a polystyrene resin (ESTYRENE MS-600) was used as the resin (B). The short diameter of the domain of the resin (B) observed by TEM was 1 μm or less. Both tensile properties and optical properties were good.

[Comparative Example 6]

A film for the measurement of stretching properties was prepared using Polycarbonate Resin (A-3) obtained in Production Example 3 and evaluated for various physical properties described above.

[Comparative Example 7]

The preparation and evaluation were performed in the same manner as in Example 18 except that 1 part by weight of a polystyrene resin (G9504) was used as the resin (B). The short diameter of the domain of the resin (B) observed by TEM was 1 μm or less, but the haze of the film was slightly increased. The tensile properties were good.

[Comparative Example 8]

The preparation and evaluation were performed in the same manner as in Example 18 except that 5 parts by weight of a polystyrene resin (G9504) was used as the resin (B). The haze of the film was slightly increased. The short diameter of the domain of the resin (B) observed by TEM was from 1 to 3 μm.

[Comparative Example 9]

The preparation and evaluation were performed in the same manner as in Example 18 except that 5 parts by weight of a polystyrene resin (ESTYRENE MS-200, produced by Nippon Steel & Sumikin Chemical Co., Ltd.) was used as the resin (B). The short diameter of the domain of the resin (B) observed by TEM was 1 μm or less, but the haze of the film was slightly increased. The tensile properties were good.

The results of Examples and Comparative Examples are shown in Tables 2 to 4.

[Table 2]

| | | Unit | Example | | | | | | | | Comparative Example | |
|---|---|---|---|---|---|---|---|---|---|---|---|---|
| | | | 1 | 2 | 3 | 4 | 5 | 6 | 7 | 8 | 1 | 2 |
| Polycarbonate resin (A) | Production Example 1 (Polycarbonate Resin A-1) | parts by weight | 100 | 100 | 100 | 100 | 100 | 100 | 100 | 100 | 100 | 100 |
| | Production Example 2 (Polycarbonate Resin A-2) | parts by weight | - | - | - | - | - | - | - | - | - | - |
| | Production Example 3 (Polycarbonate Resin A-3) | parts by weight | - | - | - | - | - | - | - | - | - | - |
| | Refractive index | - | 1.5873 | 1.5873 | 1.5873 | 1.5873 | 1.5873 | 1.5873 | 1.5873 | 1.5873 | 1.5873 | 1.5873 |

(continued)

| | | Unit | Example | | | | | | | | Comparative Example | |
|---|---|---|---|---|---|---|---|---|---|---|---|---|
| | | | 1 | 2 | 3 | 4 | 5 | 6 | 7 | 8 | 1 | 2 |
| Resin (B) | Polystyrene resin (G9504) | parts by weight | 1 | 5 | - | - | - | - | - | - | - | - |
| | Polystyrene resin (HF-77) | parts by weight | - | - | 1 | - | - | - | - | - | - | - |
| | Polystyrene resin (HP-500M) | parts by weight | - | - | - | 1 | - | - | - | - | - | - |
| | Polystyrene resin (G9001) | parts by weight | - | - | - | - | 1 | - | - | - | - | - |
| | Polystyrene resin (POLYIMILEX PAS1460) | parts by weight | - | - | - | - | - | 1 | - | - | - | - |
| | Aromatic polycarbonate resin (NOVAREX 7022R) | parts by weight | - | - | - | - | - | - | 1 | 5 | - | - |
| | Polystyrene resin (SANREXSAN-H) | parts by weight | - | - | - | - | - | - | - | - | - | 1 |
| | Polystyrene resin (ESTYRENE MS-600) | parts by weight | - | - | - | - | - | - | - | - | - | - |

(continued)

| | | Unit | Example | | | | | | | | Comparative Example | |
|---|---|---|---|---|---|---|---|---|---|---|---|---|
| | | | 1 | 2 | 3 | 4 | 5 | 6 | 7 | 8 | 1 | 2 |
| Resin (B) | Polystyrene resin (MARUKALYNCUR CST15) | parts by weight | - | - | - | - | - | - | - | - | - | - |
| | Polystyrene resin (MARUKALYNCUR CST50) | parts by weight | - | - | - | - | - | - | - | - | - | - |
| | Polystyrene resin (MARUKALYNCUR CST70) | parts by weight | - | - | - | - | - | - | - | - | - | - |
| | Polystyrene resin (ESTYRENE MS-200) | parts by weight | - | - | - | - | - | - | - | - | - | - |
| | Glass transition temperature | °C | 103 | 103 | 94 | 102 | 120 | 162 | 146 | 146 | - | 108 |
| | Refractive index | - | 1.5893 | 1.5893 | 1.5899 | 1.5894 | 1.5824 | 1.5912 | 1.5870 | 1.5870 | - | 1.5642 |
| Refractive index difference (absolute value) between polycarbonate resin(A) and resin(B) | | - | 0.0020 | 0.0020 | 0.0026 | 0.0021 | 0.0049 | 0.0039 | 0.0003 | 0.0003 | - | 0.0231 |
| Glass transition temperature of resin composition | | °C | 127 | 126 | 127 | 127 | 127 | 128 | 127 | 127 | 127 | 127 |
| Glass transition temperature difference (absolute value) between polycarbonate resin (A) and resin (B) | | °C | 24 | 24 | 33 | 25 | 7 | 35 | 19 | 19 | - | 19 |
| Water absorption percentage | | % | 1.2 | 1.1 | 1.2 | 1.1 | 1.1 | 1.2 | 1.2 | 1.1 | 1.2 | 1.2 |
| Tensile test | Tensile elongation at break (Tig+6°C) | % | 240 | 270 | 240 | 240 | 250 | 200 | 230 | 250 | 200 | 210 |
| | Yield stress (Tig+6°C) | MPa | 9 | 8 | 8 | 9 | 9 | 12 | 8 | 8 | 10 | 10 |
| Retardation | R450/R550 | - | 0.91 | 0.91 | 0.91 | 0.91 | 0.90 | 0.90 | 0.92 | 0.97 | 0.91 | 0.91 |
| Haze of film | | % | 0.4 | 0.9 | 0.3 | 0.4 | 0.6 | 12 | 0.6 | 0.9 | 0.3 | 15 |

[Table 3]

| | | Unit | Example | | | | | | | | | Comparative Example | | |
|---|---|---|---|---|---|---|---|---|---|---|---|---|---|---|
| | | | 9 | 10 | 11 | 12 | 13 | 14 | 15 | 16 | 17 | 3 | 4 | 5 |
| Polycarbonate resin (A) | Production Example 1 (Polycarbonate Resin A-1) | parts by weight | - | - | - | - | - | - | - | - | - | - | - | - |
| | Production Example 2 (Polycarbonate Resin A-2) | parts by weight | 100 | 100 | 100 | 100 | 100 | 100 | 100 | 100 | 100 | 100 | 100 | 100 |
| | Production Example 3 (Polycarbonate Resin A-3) | parts by weight | - | - | - | - | - | - | - | - | - | - | - | - |
| | Refractive index | - | 1.5956 | 1.5956 | 1.5956 | 1.5956 | 1.5956 | 1.5956 | 1.5956 | 1.5956 | 1.5956 | 1.5956 | 1.5956 | 1.5956 |
| Resin (B) | Polystyrene resin (G9504) | parts by weight | 1 | - | - | 5 | 8 | 10 | - | - | - | - | - | 20 |
| | Polystyrene resin (HF-77) | parts by weight | - | 1 | - | - | - | - | - | - | - | - | - | - |
| | Polystyrene resin (HP-500M) | parts by weight | - | - | - | - | - | - | - | - | - | - | - | - |
| | Polystyrene resin (G9001) | parts by weight | - | - | - | - | - | - | - | - | - | - | - | - |
| | Polystyrene resin (POLYIMILEX PAS1460) | parts by weight | - | - | - | - | - | - | - | - | - | - | - | - |

(continued)

| | | Unit | Example | | | | | | | | | Comparative Example | | |
|---|---|---|---|---|---|---|---|---|---|---|---|---|---|---|
| | | | 9 | 10 | 11 | 12 | 13 | 14 | 15 | 16 | 17 | 3 | 4 | 5 |
| Resin (B) | Aromatic polycarbonate resin (NOVAREX 7022R) | parts by weight | - | - | 1 | - | - | - | - | - | - | - | - | - |
| | Polystyrene resin (SANREX SAN-H) | parts by weight | - | - | - | - | - | - | - | - | - | - | 1 | - |
| | Polystyrene resin (ESTYRENE MS-600) | parts by weight | - | - | - | - | - | - | - | - | - | - | - | - |
| | Polystyrene resin (MARUKA LYNCUR CST15) | parts by weight | - | - | - | - | - | - | 5 | - | - | - | - | - |
| | Polystyrene resin (MARUKA LYNCUR CST50) | parts by weight | - | - | - | - | - | - | - | 5 | - | - | - | - |
| | Polystyrene resin (MARUKA LYNCUR CST70) | parts by weight | - | - | - | - | - | - | - | - | 5 | - | - | - |
| | Polystyrene resin (ESTYRENE MS-200) | parts by weight | - | - | - | - | - | - | - | - | - | - | - | - |
| | Glass transition temperature | °C | 103 | 120 | 146 | 103 | 103 | 103 | 99 | 86 | 107 | - | 108 | 103 |
| | Refractive index | - | 1.5893 | 1.5899 | 1.5870 | 1.5893 | 1.5893 | 1.5893 | 1.5890 | 1.5905 | 1.5932 | - | 1.5642 | 1.5893 |
| Refractive index difference (absolute value) between polycarbonate resin(A) and resin(B) | | - | 0.0063 | 0.0057 | 0.0086 | 0.0063 | 0.0063 | 0.0063 | 0.0066 | 0.0051 | 0.0024 | - | 0.0314 | 0.0063 |
| Glass transition temperature of resin composition | | °C | 144 | 145 | 145 | 145 | 145 | 145 | 144 | 143 | 141 | 145 | 145 | 145 |

(continued)

| | | Unit | Example | | | | | | | | | Comparative Example | | |
|---|---|---|---|---|---|---|---|---|---|---|---|---|---|---|
| | | | 9 | 10 | 11 | 12 | 13 | 14 | 15 | 16 | 17 | 3 | 4 | 5 |
| Glass transition temperature difference (absolute value) between polycarbonate resin (A) and resin (B) | | °C | 42 | 25 | 1 | 42 | 42 | 42 | 45 | 59 | 38 | - | 37 | 42 |
| Water absorption percentage | | % | 1.2 | 1.2 | 1.2 | 1.1 | 1.0 | 0.9 | 1.2 | 1.2 | 1.2 | 1.2 | 1.1 | 0.7 |
| Tensile test | Tensile elongation at break Tig+6°C) | % | 210 | 180 | 200 | 220 | 210 | 210 | 200 | 220 | 220 | 120 | 130 | 240 |
| | Yield stress (Tig+6°C) | MPa | 8 | 8 | 11 | 9 | 9 | 8 | 10 | 8 | 7 | 11 | 11 | 7 |
| Retardation | R450/R550 | - | 0.89 | 0.89 | 0.91 | 0.89 | 0.89 | 0.88 | 0.88 | 0.88 | 0.88 | 0.89 | 0.91 | 0.88 |
| Haze of film | | % | 0.4 | 0.3 | 0.5 | 2.1 | 4.1 | 5.2 | 1.5 | 0.4 | 0.1 | 0.3 | 18 | 6.2 |

[Table 4]

| | | Unit | Example 18 | Example 19 | Comparative Example 6 | Comparative Example 7 | Comparative Example 8 | Comparative Example 9 |
|---|---|---|---|---|---|---|---|---|
| Polycarbonate resin (A) | Production Example 1 (Polycarbonate Resin A-1) | parts by weight parts | - | - | - | - | - | - |
| | Production Example 2 (Polycarbonate Resin A-2) | parts by weight | - | - | - | - | - | - |
| | Production Example 3 (Polycarbonate Resin A-3) | parts by weight | 100 | 100 | 100 | 100 | 100 | 100 |
| | Refractive index | - | 1.5319 | 1.5319 | 1.5319 | 1.5319 | 1.5319 | 1.5319 |

(continued)

| | | Unit | Example 18 | Example 19 | Comparative Example 6 | Comparative Example 7 | Comparative Example 8 | Comparative Example 9 |
|---|---|---|---|---|---|---|---|---|
| Resin (B) | Polystyrene resin (G9504) | parts by weight | - | - | - | 1 | 5 | - |
| | Polystyrene resin (HF-77) | parts by weight | - | - | - | - | - | - |
| | Polystyrene resin (HP-500M) | parts by weight | - | - | - | - | - | - |
| | Polystyrene resin (G9001) | parts by weight | - | - | - | - | - | - |
| | Polystyrene resin (POLYIMILEX PAS1460) | parts by weight | - | - | - | - | - | - |
| | Aromatic polycarbonate resin (NOVAREX 7022R) | parts by weight parts by weight | - | - | - | - | - | - |
| | Polystyrene resin (SANREX SAN-H) | parts by weight | - | - | - | - | - | - |
| | Polystyrene resin (ESTYRENE MS-600) | parts by weight | 1 | 5 | - | - | - | - |
| | Polystyrene resin (MARUKA LYNCUR CST15) | parts by weight | - | - | - | - | - | - |
| | Polystyrene resin (MARUKA LYNCUR CST50) | parts by weight | - | - | - | - | - | - |
| | Polystyrene resin (MARUKA LYNCUR CST70) | parts by weight | - | - | - | - | - | - |

(continued)

| | | Unit | Example 18 | Example 19 | Comparative Example 6 | Comparative Example 7 | Comparative Example 8 | Comparative Example 9 |
|---|---|---|---|---|---|---|---|---|
| Resin (B) | Polystyrene resin (ESTYRENE MS-200) | parts by weight | - | - | - | - | - | 5 |
| | Glass transition temperature | °C | 102 | 102 | - | 103 | 103 | 99 |
| | Refractive index | - | 1.5318 | 1.5318 | - | 1.5893 | 1.5893 | 1.5697 |
| Refractive index difference (absolute value) between polycarbonate resin(A) and resin(B) | | - | 0.0001 | 0.0001 | - | 0.0574 | 0.0574 | 0.0378 |
| Transparency of pellet after kneading | | - | transparent | transparent | transparent | white turbid | white turbid | white turbid |
| Glass transition temperature of resin composition | | °C | 133 | 131 | 134 | 134 | 134 | 134 |
| Glass transition temperature difference (absolute value) between polycarbonate resin (A) and resin (B) | | °C | 33 | 33 | - | 32 | 32 | 36 |
| Water absorption percentage | | % | 0.5 | 0.6 | 0.6 | 0.5 | 0.5 | 0.6 |
| Tensile test | Tensile elongation at break (Tig+6°C) | % | 190 | 170 | 140 | 190 | 150 | 170 |
| | Yield stress (Tig+6°C) | MPa | 9 | 9 | 10 | 9 | 9 | 8 |
| Retardation | R450/R550 | - | 0.92 | 0.91 | 0.92 | 0.92 | 0.92 | 0.92 |
| Haze of film | | % | 0.6 | 0.4 | 0.8 | 2.5 | 8.7 | 2.6 |

While the invention has been described in detail and with reference to specific embodiments thereof, it will be apparent to one skilled in the art that various changes and modifications can be made therein without departing from the spirit and scope of the invention. This application is based on Japanese Patent Application (Patent Application No. 2012-171506) filed on August 1, 2012, the contents of which are incorporated herein by way of reference.

Industrial Applicability

The transparent film according to the present invention can be suitably used for an optical film such as retardation film employed in various liquid crystal display devices, mobile devices, etc. by making use of little variation of the retardation even in a long-term use under a high-temperature condition and excellent stability against temperature. In addition, a polarizing plate can be fabricated by stacking the transparent film on a polarizer.

## Claims

1. A transparent film obtained by molding a polycarbonate resin composition comprising (A) a polycarbonate resin containing (a) a structural unit derived from a dihydroxy compound represented by the following formula (1) and (b) a structural unit derived from a dihydroxy compound having an ether ring, and (B) a resin having a composition different from that of said polycarbonate resin (A), with the absolute value of the difference in the glass transition temperature from said polycarbonate resin (A) being 80°C or less and the absolute value of the difference in the refractive index being 0.02 or less, wherein said polycarbonate resin composition contains from 0.1 to 10 parts by weight of said resin (B) per 100 parts by weight of said polycarbonate resin (A) and in the transparent film, the ratio of the retardation R450 measured at a wavelength of 450 nm to the retardation R550 measured at a wavelength of 550 nm satisfies the following formula (I):

[Chem. 1]

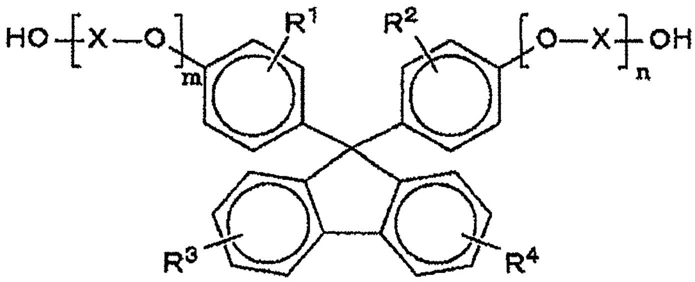

(1)

(wherein in formula (1), each of $R^1$ to $R^4$ independently represents a hydrogen atom, a substituted or unsubstituted alkyl group having a carbon number of 1 to 20, a substituted or unsubstituted cycloalkyl group having a carbon number of 6 to 20, or a substituted or unsubstituted aryl group having a carbon number of 6 to 20, X represents a substituted or unsubstituted alkylene group having a carbon number of 2 to 10, a substituted or unsubstituted cycloalkylene group having a carbon number of 6 to 20, or a substituted or unsubstituted arylene group having a carbon number of 6 to 20, and each of m and n is independently an integer of 0 to 5); and

$$0.5 < R450/R550 < 1.0 \qquad (I)$$

2. The transparent film according to claim 1, wherein said resin (B) has a glass transition temperature lower than the glass transition temperature of said polycarbonate resin (A).

3. The transparent film according to claim 1 or 2, wherein the glass transition temperature of said polycarbonate resin (A) is from 100 to 160°C.

4. The transparent film according to any one of claims 1 to 3, wherein the glass transition temperature of said resin (B) is from 75 to 160°C.

5. The transparent film according to any one of claims 1 to 4, wherein when the structural unites derived from all dihydroxy compounds constituting said polycarbonate resin (A) are assumed to be 100 mol%, the ratio of said structural unit (a) is 10 mol% or more.

6. The transparent film according to any one of claims 1 to 5, which is obtained by molding said polycarbonate resin composition by a melt film-forming method at a molding temperature of 265°C or less.

7. The transparent film according to any one of claims 1 to 6, which is stretched at least in one direction.

8. A polycarbonate resin composition comprising (A) a polycarbonate resin containing (a) a structural unit derived from a dihydroxy compound represented by the following formula (1) and (b) a structural unit derived from a dihydroxy compound having an ether ring, and (B) a resin having a composition different from that of said polycarbonate resin (A), with the absolute value of the difference in the refractive index from said polycarbonate resin (A) being 0.02 or less, wherein:

   when structural units derived from all dihydroxy compounds constituting said polycarbonate resin (A) is assumed to be 100 mol%, the ratio of said structural unit (a) is 10 mol% or more,
   the glass transition temperature of said polycarbonate resin (A) is from 100 to 160°C, and
   said polycarbonate resin composition contains from 0.1 to 10 parts by weight of said resin (B) per 100 parts by weight of said polycarbonate resin (A):

   [Chem. 2]

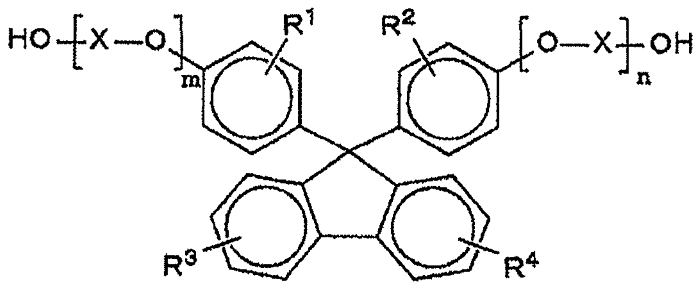

   (1)

   (wherein in formula (1), each of $R^1$ to $R^4$ independently represents a hydrogen atom, a substituted or unsubstituted alkyl group having a carbon number of 1 to 20, a substituted or unsubstituted cycloalkyl group having a carbon number of 6 to 20, or a substituted or unsubstituted aryl group having a carbon number of 6 to 20, X represents a substituted or unsubstituted alkylene group having a carbon number of 2 to 10, a substituted or unsubstituted cycloalkylene group having a carbon number of 6 to 20, or a substituted or unsubstituted arylene group having a carbon number of 6 to 20, and each of m and n is independently an integer of 0 to 5).

9. The polycarbonate resin composition according to claim 8, wherein the melt viscosity of said polycarbonate resin (A) as measured at a temperature of 240°C and a shear rate of 91.2 $sec^{-1}$ is from 500 to 3,500 Pa•sec.

10. The polycarbonate resin composition according to claim 8 or 9, wherein said resin (B) is a styrene-based resin or an aromatic polycarbonate resin.

11. The polycarbonate resin composition according to any one of claims 8 to 10, wherein the molar ratio between the structural unit (a) and the structural unit (b) of said polycarbonate resin (A) is from 20:80 to 80:20.

12. The polycarbonate resin composition according to any one of claims 8 to 11, wherein said polycarbonate resin (A) contains (c) a structural unit derived from one or more kinds of dihydroxy compounds selected from the group consisting of a dihydroxy compound represented by the following formula (2), a dihydroxy compound represented by the following formula (3), a dihydroxy compound represented by the following formula (4), and a dihydroxy compound represented by the following formula (5):

$$HO-R^5-OH \qquad (2)$$

(wherein in formula (2), $R^5$ represents a substituted or unsubstituted cycloalkylene group having a carbon number of 4 to 20);

$$HO-CH_2-R^6-CH_2-OH \qquad (3)$$

(wherein in formula (3), $R^6$ represents a substituted or unsubstituted cycloalkylene group having a carbon number of 4 to 20);

$$H-(O-R^7)_p-OH \qquad (4)$$

(wherein in formula (4), $R^7$ represents a substituted or unsubstituted alkylene group having a carbon number of 2 to 10, and p represents an integer of 2 to 100); and

$$HO-R^8-OH \qquad (5)$$

(wherein in formula (5), $R^8$ represents a substituted or unsubstituted alkylene group having a carbon number of 2 to 20, or a group having a substituted or unsubstituted acetal ring).

## INTERNATIONAL SEARCH REPORT

International application No.
PCT/JP2013/070656

A. CLASSIFICATION OF SUBJECT MATTER
*G02B5/30*(2006.01)i, *B29C47/00*(2006.01)i, *C08J5/18*(2006.01)i, *C08L69/00*(2006.01)i, *C08L101/12*(2006.01)i, *B29K69/00*(2006.01)n, *B29L7/00*(2006.01)n

According to International Patent Classification (IPC) or to both national classification and IPC

B. FIELDS SEARCHED

Minimum documentation searched (classification system followed by classification symbols)
G02B5/30, B29C47/00, C08J5/18, C08L69/00, C08L101/12, B29K69/00, B29L7/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2006/041190 A1 (Teijin Ltd.),<br>20 April 2006 (20.04.2006),<br>claims; page 6, lines 16 to 19; page 10, line 3 to page 12, line 4; examples<br>& JP 4759518 B | 1-12 |
| A | JP 2005-77963 A (Teijin Ltd.),<br>24 March 2005 (24.03.2005),<br>entire text<br>(Family: none) | 1-12 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 October, 2013 (02.10.13) | 15 October, 2013 (15.10.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/070656

C (Continuation). DOCUMENTS CONSIDERED TO BE RELEVANT

| Category* | Citation of document, with indication, where appropriate, of the relevant passages | Relevant to claim No. |
|---|---|---|
| A | WO 2008/156186 A1 (Teijin Chemicals Ltd.), 24 December 2008 (24.12.2008), entire text & JP 5119250 B & US 2010/0104777 A1 & EP 2163922 A1 & CN 101680987 A & KR 10-2010-0020458 A & TW 200916502 A & AT 543112 T | 1-12 |
| A | JP 2010-159356 A (Mitsubishi Engineering-Plastics Corp.), 22 July 2010 (22.07.2010), (Family: none) | 1-12 |
| A | JP 2012-31369 A (Mitsubishi Chemical Corp.), 16 February 2012 (16.02.2012), entire text & JP 2012-67300 A & JP 2012-117075 A & JP 2013-100528 A & US 2012/0308796 A1 & EP 2502947 A1 & WO 2011/062163 A1 & TW 201125891 A & CN 102630234 A & KR 10-2012-0116395 A | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3325560 B
- WO 200641190 A
- WO 2008156186 A
- WO 201064721 A
- JP 2012031369 A
- JP 2005077963 A
- JP 2012171506 A